# EUROPÄISCHE PATENTSCHRIFT

(11) **EP 4 223 951 B1**
(45) Veröffentlichungstag und Bekanntmachung des Hinweises auf die Patenterteilung: **29.10.2025**
(21) Anmeldenummer: 22155033.8
(22) Anmeldetag: 03.02.2022
(51) Int. Cl.: E04B 1/84

(54) **MULTIFUNKTIONELLES SYSTEM UND VERFAHREN ZUR AUSBILDUNG VON BAUWERKSTEILEN SOWIE VERFAHREN ZU DEREN OPTIMIERUNG**
MULTIFUNCTIONAL SYSTEM AND METHOD FOR CONSTRUCTING BUILDING PARTS AND METHOD FOR OPTIMISATION THEREOF
SYSTÈME MULTIFONCTIONEL ET PROCÉDÉ DE RÉALISATION D'ÉLÉMENTS STRUCTURAUX, AINSI QUE LEUR PROCÉDÉ D'OPTIMISATION

(43) Veröffentlichungstag der Anmeldung: 09.08.2023
(73) Patentinhaber: Aziz, Saqib Hashim, 10557 Berlin (DE); Gengnagel, Christoph, 14195 Berlin (DE); Alexander, Bradley, 10555 Berlin (DE)
(72) Erfinder: Aziz, Saqib Hashim, 10557 Berlin (DE); Gengnagel, Christoph, 14195 Berlin (DE); Alexander, Bradley, 10555 Berlin (DE)
(74) Vertreter: Gulde & Partner

(56) Entgegenhaltungen:
- EP-A1- 3 421 680
- EP-A1- 3 907 341
- CH-A1- 706 439
- US-A- 2 002 510

## Beschreibung

Die vorliegende Erfindung betrifft ein multifunktionelles System und ein Verfahren zur Ausbildung von Bauwerksteilen sowie ein Verfahren zu deren Optimierung. Insbesondere betrifft die Erfindung ein auf einem großformatigen dreidimensionalen additiven Fertigungsprozess wie beispielsweise Betondruck beruhendes Schalungssystem und ein Verfahren zur Ausbildung von Bauwerksteilen mit vorab definierten akustischen, thermischen und mechanischen Eigenschaften sowie ein Verfahren zur Optimierung der multifunktionalen Eigenschaften dieses Systems.

### Technischer Hintergrund

Die Erkenntnis, dass das Bevölkerungswachstum bis zum Jahr 2050 die zweistellige-Milliarden-Grenze erreichen wird und daraus ableitend das Angebot der weltweit verfügbaren Wohnfläche sich mindestens verdoppeln muss, gekoppelt mit der Tatsache, dass die Urbanisierung der Ballungsräume zu einer zunehmenden Verknappung des Wohn- und Arbeitsraums führt, stellt mit eine der größten Herausforderungen dar, der sich die heutige und die nachfolgenden Generationen gemeinsam stellen müssen. In der aktuellen Massivbauweise für Geschossbauten beinhalten Decken aus Stahlbeton den höchsten Anteil des Materialvolumens mit ca. 65 % des Materialverbrauchs des Rohbaus. Dies steht in starkem Kontrast zur notwendigen Reduktion des Ressourcenverbrauchs und der CO₂-Emissionen im Bauen. Die für den Beton notwendigen Ressourcen wie Sande und Kiese erfahren eine dramatische Verknappung und die Zementproduktion mit einem Gesamtausstoß von ca. 2,9 GtCO2e (engl. "gigatonns of carbon dioxide equivalent") verursacht einen hohen Beitrag von 6 bis 8 % zu den jährlichen weltweiten CO₂-Emissionen. Menschen verbringen etwa 87 % ihrer Zeit in Innenräumen. Diese Tatsache hat daher tiefgreifende Auswirkungen auf die gebaute Umwelt, die wir entwerfen, bauen und bewohnen, sowie auf die sozialen, kulturellen, kognitiven und gesundheitlichen Folgen, die damit verbunden sind. Dieser Umstand deckt sich auch mit den wachsenden gesellschaftlichen Ansprüchen an die bauphysikalische Wohnqualität und dem Streben nach nachhaltigeren und umweltschonenderen Bau- und Versorgungsprozessen. Die Bauindustrie steht somit vor vielfältigen Herausforderungen, die schnelle und umfassende alternative Lösungen erfordern.

Die sich in der Bauwirtschaft stetig weiterentwickelnden digitalen Entwurfswerkzeuge und Prozesse ermöglichen eine immer größer werdende Formenvielfalt in der Architektur, die ein hohes Potential für die Verbesserung einer Vielzahl von performativen Eigenschaften von Bauten beinhaltet. Diese Formenvielfalt sind in den aktuellen Massivbauweisen jedoch nur mit einem hohen Einsatz an menschlicher Arbeitskraft und zusätzlichen Materialressourcen (Schalungsbau) umsetzbar. Dem entsprechend entsteht auch hieraus die Notwendigkeit der Entwicklung alternativer Herstellung und Fertigungsprozesse. Als Zielstellung steht dabei aber nicht allein die Reduktion des Materialverbrauchs für Beton, sondern ebenso Einsparungen und Vereinfachungen bei der Bewehrungsplanung und -umsetzung.

Stahlbeton ist ein Verbundwerkstoff aus Beton und Bewehrungsstahl. Der Bewehrungsstahl wird mit Hilfe einer Schalung meist auf der Baustelle mit Ortbeton monolithisch vergossen. Beton selbst verfügt über keine hohe Duktilität, eine hohe Druckfestigkeit und geringe Zugfestigkeit. Dem entsprechend übernimmt die Stahlbewehrung aufgrund ihrer hohen Zugfestigkeit die Weiterleitung von Zugbeanspruchungen. Bewehrungsstahl ist jedoch korrosionsanfällig und muss dem entsprechend mit einer ausreichenden Betonüberdeckung vor Korrosion geschützt werden. Der Bau der Schalung und insbesondere der Einbau der Bewehrung in die Schalung sind aktuell sehr zeitaufwendige und zugleich fehleranfällige Arbeitsprozesse.

Wie voranstehend bereits beschrieben, umfasst das Materialvolumen der Geschossdecken in mehrgeschossigen Skelettbauten aktuell ca. 65 % des Gesamtvolumens des Rohbaus. Dabei erfolgt die globale Bemessung der Plattenstärken für wenige lokale maximale Beanspruchungspunkte. Aufgrund der notwendigen Effizienzsteigerung von Bauprozessen und der Reduktion des Schalungsaufwands wird die lokal notwendige Bauteilstärke für die gesamte Fläche des Bauteils verwendet. Auf eine beanspruchungsaffine Formgebung der Decken wird im Regelfall trotz vorhandener Berechnungsmethoden und Werkzeuge verzichtet.

Aufgrund ihrer einfachen Herstellbarkeit dominieren konventionelle Stahlbetonflachdeckenkonstruktionen die Hochbaukonstruktionen im Massivbau. Sie gelten als sehr wirtschaftliche und anpassungsfähige Lösung. Diese Bewertung vernachlässigt jedoch den enormen Materialverbrauch dieser Bauweise, das damit verbundene schlechte Verhältnis von Eigengewicht und Tragfähigkeit, sowie ihre raumakustischen Schwächen. Eine Vielzahl der Forschungsprojekte im Bereich des additiven Druckens mit Betonen hat jedoch in den letzten Jahren zu einer sehr raschen Entwicklung von entsprechenden Drucktechnologien und des Druckmaterials geführt.

Ein vielversprechendes Konzept für solch eine ressourcenschonendere Baupraktik ist der großformatige und dreidimensionale Betondruck (engl. "three-dimensional concrete printing", 3DCP), mit dem Potenzial teure Schalungsprozesse und manuelle Arbeitszeit zu reduzieren. Die gängigste Methode wird auch als Contour Crafting bezeichnet (Khoshnevis et al., Mega-scale fabrication by contour crafting. International Journal of Industrial and Systems Engineering, 2006, 1. Jg., Nr. 3, S. 301-320) und gehört zur Kategorie Additive Manufacturing (AM). Es gibt zudem einige alternative additive Herstellungsverfahren. Die Forschung von Prof. P. Block (ETH Zürich) untersucht das Optimierungspotenzial von Deckensystemen unter Anwendung neuer Herstellungstechnologie bereits seit Jahren (Meibodi et al., Smart Slab. Computational design and digital fabrication of a lightweight concrete slab. In: Proceedings of the 38th Annual Conference of the Association for Computer Aided Design in Architecture (ACADIA). Mexico City. Mexico. 18.-20. Oktober 2018. S. 434-443). Das Verfahren nutzt die additive Herstellung, um aus thermoplastischen Materialien komplexe Schalungselemente herzustellen, die dann mit Beton vergossen werden. Bei diesem Verfahren entsteht jedoch viel Abfall, da die gedruckte Schalung weder recycelt und nur bedingt wiederverwendet werden kann.

Einen weiteren Ansatz umfassen die Arbeiten des Collaborative Research Center TRR 277: Additive Manufacturing in Construction (AMC) der TU Braunschweig, mit der Nutzung von Spritzbeton (Shotcrete 3D Printing). Bei diesem Vorgang wird eine Betonmixtur mit dem Grundprinzip des Spritzbetonverfahrens mit Hilfe der robotischen Fertigung erweitert und gleichzeitig die Bewehrungsführung integrativ gelöst (Kloft et al., Reinforcement strategies for 3D-concrete-printing. Civil Engineering Design, 2020, 2. Jg., Nr. 4, S. 131-139). Obwohl dieses Verfahren einige Vorteile bietet - flexiblere Reichweite und Positionierung während der Materialdisposition - ist die erreichbare Präzision dieser Methode deutlich eingeschränkt.

Neben den genannten ökonomischen, ökologischen, strukturellen, material-, und prozesstechnologischen Aspekten sind bei der Gebäudeplanung jedoch stets noch weitere Aspekte mit zu berücksichtigen. Insbesondere Lärmbelästigung und hohe Raumtemperaturen in Innenräumen haben einen erheblichen Einfluss auf die Gesundheit und Arbeitsproduktivität der Nutzer. Neben den damit verursachten Krankheitsanfälligkeiten führen diese Umweltbelastungen vor allem zu einer abnehmenden Konzentration und damit zu einer erhöhten Fehler- und Unfallanfälligkeit. Zur Kompensation und Abhilfe werden umfangreiche, wartungsintensive und komplexe haustechnische Anlagen und weitere additive baukonstruktive Maßnahmen notwendig. Damit steigt in der Summe der Material- und Energieverbrauch für Herstellung und Betrieb.

Um die akustischen Randbedingungen von Räumen durch Erhöhung der äquivalenten Schallabsorptionsflächen zu beeinflussen, kommen herkömmliche Schallabsorber, beispielsweise durch eine aufwendige heterogene Integration poröser Materialien in die Bausubstanz und über zusätzliche Gestaltungselemente zur gezielten Beeinflussung der Raumakustik, zum Einsatz. Zur Beeinflussung des Raumklimas wird meistens auf unwirtschaftliche mechanische Anlagen zurückgegriffen, die mit hohen Betriebskosten und einigen Einbußen bei der Behaglichkeit einhergehen. Zudem entsteht ein unnötig dicker Deckenaufbau (durch Gebäudetechnik und akustische Abhangdecken), welcher die nutzbare Geschoßhöhe reduziert. Einige Forschungsprojekte versuchen daher die Gebäudetechnik und/oder die Akustiksegel in das Deckenelement zu integrieren (Jipa et al., 3D-printed formwork for integrated funicular concrete slabs. In: Proceedings of IASS Annual Symposia. International Association for Shell and Spatial Structures (IASS), 2019. S. 1-8). Eine erfolgreiche Integration kann zur Folge haben, dass die Geschoßanzahl zunimmt und das Wohlbefinden in Innenräumen deutlich steigt.

Zur ökologischen Optimierung eines Deckensystems im Rahmen einer energetischen und thermischen Strategie sollte daher nicht nur versucht werden, den "embodied carbon" zu reduzieren, indem weniger Beton verwendet wird, sondern es sollte auch der "operational carbon" während der Lebensdauer des Gebäudes minimiert werden. Dies kann beispielsweise durch eine Integration von hocheffizienten Heiz- und Kühlsystemen in das Deckensystem erfolgen. Im Stand der Technik sind hierzu sehr effiziente thermisch aktivierte Deckenplatten oder thermisch aktivierte Bausteilsysteme (TABS, z. B. Hybridheiz-/Kühldeckensegel) bekannt (Olsen. Operation and control of thermally activated slab heating and cooling systems. IAQVEC, Sendai, Japan, 2007, S. 28-31).

EP 3 907 341 A1 betrifft einen Akustikkörper für Deckenelemente zur Reduktion einer Nachhallzeit von Schall. Des Weiteren betrifft das Dokument eine Akustikdecke, umfassend eine erste Deckfläche, eine davon beabstandete zweite Deckfläche und wenigstens einen zwischen den beiden Deckflächen angeordneten Akustikkörper. Weiters betrifft das Dokument ein Verfahren zur Herstellung einer solchen Akustikdecke.

CH 706 439 A1 bezieht sich neben einem schallabsorbierenden Element und einem Verbund aus einer Deckschicht mit einer Mikroperforation und einer Zwischenschicht, welche mit der Deckschicht verbunden ist, auf ein Verfahren zur Herstellung solcher schallabsorbierenden Elemente und Verbünde, wobei eine Deckschicht mit einer Mikroperforation, eine Trägerschicht mit mehreren durchgehenden Öffnungen, wie insbesondere Bohrungen oder Schlitzungen, und eine Zwischenschicht, welche die Deckschicht beabstandet von der Trägerschicht hält, angeordnet werden, wobei die Zwischenschicht ausgebildet ist, um zur Erzeugung einer schallabsorbierenden Wirkung zwischen der Mikroperforation der Deckschicht und Öffnungen der Trägerschicht eine kommunizierende Verbindung zu erstellen.

US 2 002 510 A betrifft ein akustisches Baukonstruktionselement, umfassend eine gehärtete Platte aus zementartigem Material mit einer auf einer Oberfläche ausgebildeten Verstärkungsrippe und mit einer Vielzahl von sich verjüngenden Öffnungen, die sich durch die Platte von einer Oberfläche zur anderen neben der Rippe erstrecken, wobei die Öffnungen mit ihren größeren Enden in der Oberfläche mit der Rippe angeordnet sind.

EP 3 421 680 A1 befasst sich mit einem Verfahren zur Bewehrung von Betonbauteilen, z. B. von stabförmigen Bauteilen, wie Balken oder Säulen, von flächigen Bauteilen, wie verschiedenen Wänden und Platten, sowie von volumetrischen Bauteilen, wie Fundamentblöcken. Die Bewehrungsmethode basiert auf der Optimierung der Richtungen und Abmessungen der Betonbewehrung, die während der Herstellung des Betonbauteils in die Schalung eingebracht wird.

### Aufgabe der Erfindung

Es ist daher eine Aufgabe der vorliegenden Erfindung, die im Stand der Technik auftretenden Probleme zu vermeiden oder zumindest zu verringern und insbesondere die Ausbildung von Bauwerksteilen wie Decken, Böden und Wände unter Berücksichtigung ökonomischer, ökologischer, struktureller, material-, und prozesstechnologischer sowie akustischer und thermischer Aspekte zu optimieren. Dabei soll insbesondere bereits in der Planungsphase durch einen integrativen Ansatz eine Berücksichtigung möglichst aller relevanten Aspekte im Rahmen eines einheitlichen multifunktionalen Systems erfolgen.

### Beschreibung der Erfindung

Diese Aufgaben werden erfindungsgemäß durch die Merkmale der unabhängigen Patentansprüche gelöst. Zweckmäßige Ausgestaltungen der Erfindung sind in den einzelnen Unteransprüchen enthalten.

Ein Aspekt der vorliegenden Erfindung betrifft einen Schallabsorber für Schalungselemente, umfassend einen Grundkörper mit einem darin eingeschlossenen Hohlraum, wobei der Hohlraum sich von einer Einlassöffnung mit einem Einlassdurchmesser auf einen maximalen Innendurchmesser größer als der Einlassdurchmesser erweitert und einen Helmholtz-Resonator zur Schallunterdrückung ausbildet.

Die genaue Form sowohl des Hohlraums als auch der Einlassöffnung kann abhängig von den gewünschten Eigenschaften variieren und angepasst werden. Vorzugsweise kann eine Einlassöffnung eine im Wesentlichen kreis- oder rautenförmige Struktur aufweisen. Die Einlassöffnung kann jedoch insbesondere auch schlitz- bzw. linienförmig mit einem geraden oder gekrümmten Verlauf ausgebildet sein. Der Einlassdurchmesser kann somit in Bezug auf die Einlassöffnung richtungsabhängig definiert sein.

Der Hohlraum kann eine oder mehrere Einlassöffnungen an einer Oberfläche des Grundkörpers aufweisen. Durch die Kombination einer unterschiedlichen Anzahl von Einlassöffnungen sowie Variationen bei der Formgebung und Dimensionierung sowohl der EinlassÖffnungen als auch der Hohlräume zur Ausbildung verschiedener Resonatorhalsgeometrien können unterschiedliche spektrale Absorptionseigenschaften für den Hohlraum des Schallabsorbers eingestellt werden. Vorzugsweise bildet der Hohlraum ausgehend von seinem Inneren eine trichterförmige Verjüngung in Richtung einer Einlassöffnung aus. Zur Variation der spektrale Absorptionseigenschaften können entsprechend auch mehrere unterschiedlich ausgebildete Hohlraumstrukturen mit jeweils nur einer einzigen Einlassöffnung nebeneinander bzw. innerhalb eines gemeinsamen Grundkörpers angeordnet werden. Beide Variationsansätze können auch miteinander kombiniert werden.

Entsprechend ausgebildete Helmholtz-Resonatoren (auch als Feder-Masse-Schwinger bezeichnet) sind besonders effektiv und können als Resonanzabsorber zur Absorption schmalbandiger, niederfrequenter Raummoden eingesetzt werden. Diese können zusätzlich mit porösen Schallabsorbern (Absorption mittlerer und hoher Frequenzen) kombiniert werden. Die träge Masse der Luft im sogenannten Flaschenhals des Helmholtz-Resonators schwingt über der Luft-Feder im Innenraum des Resonators, wobei die auftretende Schallenergie hierbei in kinetische Energie umgewandelt und somit absorbiert wird. Je nach geometrischer Bestimmung der beiden Volumenkörper zueinander können verschiedene Resonanzfrequenzen aufgenommen werden. Das erfindungsgemäß angewendete Prinzip erlaubt eine Integration dieser Resonatoren in Schalungselemente und ermöglicht somit eine wirtschaftliche und integrative Anbindung von Helmholtz-Resonatoren an die Möglichkeit zur additiven Herstellung von Flächenstrukturen.

Erfindungsgemäß erfolgt eine Herstellung des Schallabsorbers mittels eines additiven Fertigungsprozesses für mineralische Werkstoffe schichtweise, wobei im Fertigungsprozess ein selbsttragendes Strukturgefüge ausgebildet wird. Bei einem additiven Fertigungsprozess für mineralische Werkstoffe kann es sich beispielsweise um Betondruck, Spritzbetondruck oder ein anderes additives Verfahren handeln. Die Materialauswahl ist jedoch nicht auf Beton beschränkt, vielmehr kann jedes im Baubereich einsetzbare mineralische Material (z. B. Lehm oder mineralischer Kunststoff) hierfür verwendet werden.

Besonders bevorzugt erfolgt eine Herstellung des Schallabsorbers schichtweise mittels streifenförmig aufgebrachtem dreidimensionalen Betondruck unter Ausbildung eines selbsttragenden Strukturgefüges. Unter einem selbsttragenden Strukturgefüge wird dabei ein Fertigungsergebnis verstanden, welches ohne einen Rahmen oder zusätzliche Stützelemente von sich aus eine entsprechende dreidimensionale Strukturbildung ermöglicht. Dies kann u. a. dadurch erreicht werden, dass die Dicke des Materialauftrags lokal variiert wird und/oder die Form der 3D-Struktur zusätzlich entsprechende Stützelemente aus dem Druckmaterial selbst beinhaltet. Im Gegensatz zu konventionellen Schallschutzmaßnahmen kann eine solche flexibel anpassbare Absorberstruktur beispielweise direkt als Betonelement ausgebildet werden und als homogener Bestandteil eines Bauwerksteils unmittelbar in dieses integriert werden. Durch diesen Ansatz kann der Schallabsorber als direktes Element eines Bauwerksteils wie einer Decke oder von Wänden betrachtet und sowohl architektonisch als auch bautechnisch zusammen mit den einzelnen Bauwerksteilen geplant werden.

Beispielsweise können während eines 3DPC-Druckprozesses mit schichtweisem Auftragen von zähflüssigem Druckmaterialien wie z. B. Betonen (Zement, Schaumbeton, Lehm) trichterartige und sich nach oben verjüngenden Hohlräumen in einem zugehörigen Grundkörper ausgebildet werden. Die Verjüngung kann geometrisch so ausgebildet werden, dass sich ein geschlossener Deckel als Abschluss bildet und nur die ausgewählten Einlassöffnungen der jeweiligen Flaschenhälse als Durchbrüche offenbleiben. Die vorzugsweise trichterförmig ausgebildeten Hohlräume können somit in ihrer Breite und Länge variiert und automatisiert in ihrer Höhe begrenzt werden, so dass die vertikale Schichtung entlang der Richtung der Resonatorerstreckung und die aus der Logik folgenden Überhänge pro Schicht zu keinem Versagen oder Kollabieren der Gesamtstruktur während des Druckens führen. Zudem kann durch die Wahl der Druckbreite, der Druckgeschwindigkeit und der Verteilung der Druckvolumina während des Druckvorgangs eine hohe Varianz der zueinander stehenden geometrischen Attribute der Helmholtz-Geometrien geschaffen werden.

Bei vergleichbaren Bauweisen auf der Basis additive Fertigungsprozesse im Stand der Technik, insbesondere für die Herstellung von Wand und Deckenelementen, werden im Wesentlichen akustische Taschen als Absorbergeometrien für Schallabsorber konzipiert und integriert. Dabei werden die Resonatorhälse nachträglich durch manuelle Bohrungen hinzugefügt. Da bei diesen Verfahren jedoch die sich dabei ergebende Halslänge durch die Druckbreite vorgegeben wird, können hierbei nur die Resonanzvolumina variiert werden. Experimentelle Untersuchungen haben jedoch gezeigt, dass besonders die Anzahl und die Geometrie der Resonatorhälse den größten akustischen Effekt auf die Resonanzfrequenz ausüben. Zudem ist die Bildung dieser Taschen in ihre geometrischen Freiheit sehr limitiert. Sie leitet sich nicht aus einer akustischen Validierung heraus ab, sondern stehen in direkter Abhängigkeit zu einer vorhergehenden statischen Strukturbildung. Die konzipierten akustischen Taschen bilden durch die Art der Generierung zudem materialbezogene Schwachstelle der Gesamtstruktur und sind daher besonders bruchgefährdet.

Ein weiterer Aspekt der Erfindung betrifft ein Schalungselement umfassend eine Bodenzone zur Bereitstellung eines tragfähigen Bodens und eine auf der Bodenzone angeordnete Absorberzone mit mindestens einem erfindungsgemäßen Schallabsorber zur Schallunterdrückung. Die von den Helmholtz-Resonatoren ausgebildeten Hohlräume und/oder weitere im Grundkörper des Resonators angeordnete abgeschlossene sonstige Hohlräume oder offene Strukturen können durch eine entsprechend dimensionierte Auslegung als im Wesentlichen hohle Aussparungskörper verwendet werden.

Allgemeine Schalungselemente sind im Stand der Technik bekannt und werden insbesondere dazu genutzt, beim Erzeugen von Betonflächen entsprechende Aussparungen in den Flächen zu ermöglichen. Die Schalungselemente können dabei als geschlossene Struktur, beispielsweise als luft- oder anderweitig gefüllter Hohlkörper, oder als offene Struktur, beispielsweise als kastenförmiger Aussparungskörper realisiert sein. Geschlossene Schalungselemente erlauben eine vollständige Integration im Inneren oder in der Oberfläche beispielsweise des Materials einer Decken- oder Wandfläche. Die Flächen zeigen dann an der Oberfläche zumeist keine Strukturierung. Im Gegensatz dazu werden bei einer Verwendung von Schalungselementen mit einer offenen Struktur auch entsprechend der erzeugten Aussparung Decken oder Wände mit einer sichtbar strukturierten Oberfläche erzeugt. Ein erfindungsgemäßes Schalungselement mit einer Bodenzone und einer darauf angeordneten Absorberzone kann bei entsprechender Ausbildung zur Realisierung einer Hohlkörperdecke genutzt werden. Dadurch lässt sich ein ebenes Decken- bzw. Wandbild ohne von außen sichtbare Aussparungen erzeugen. Die Einlassöffnungen der Schallabsorber müssen zur Schallabsorption dabei an einer freibleibenden Oberfläche des als Hohlkörperelement ausgebildeten Schalungskörpers angeordnet sein.

Vorzugsweise umfasst das Schalungselement weiterhin eine auf der Absorberzone angeordnete Aussparungszone zur Bereitstellung eines Aussparungskörpers. Die Aussparungszone kann dabei durch einen umlaufenden Rand mit einer Innen- und einer Außenseite ausgebildet werden. Der entsprechende Rand schließt somit ein innenliegendes Freivolumen ein. Ein solches Schalungselement wird aufgrund seines Aussparungskörpers mit einer offenen Struktur auch als Kassettenelement bezeichnet. Im Falle einer Verwendung von solchen Schalungselementen in einer Decke spricht man daher von einer Kassettendecke. Die Besonderheit von Schalungselementen mit offener Struktur ist, dass die Aussparung als solches üblicherweise auch im fertigen Bauwerksteil zu erkennen ist.

Vorzugsweise weist eine innere Wandung des Aussparungskörpers (d. h. der innere Rand der Aussparungszone) eine Strukturierung zur diffusen Streuung von reflektiertem Schall auf (integrierter Diffusor). Bei der Strukturierung kann es sich beispielsweise um eine akustisch wirksame Wellenstruktur oder eine andere als Diffusor für einfallende Schallwellen wirkende Oberflächenausbildung handeln.

Erfindungsgemäß erfolgt eine Herstellung des Schalungselements mittels eines additiven Fertigungsprozesses für mineralische Werkstoffe schichtweise, wobei im Fertigungsprozess ein selbsttragendes Strukturgefüge ausgebildet wird. Für den additiven Fertigungsprozess gilt das voranstehend zur Herstellung des Schallabsorbers Ausgeführte entsprechend. Bevorzugt ist, dass sowohl der Schallabsorber als auch das Schalungselement mit einem einheitlichen additiven Fertigungsprozess hergestellt werden. Der Schallabsorber und das Schalungselement können jedoch auch aus heterogenen Materialien zusammengestellt oder mittels unterschiedlicher Fertigungsverfahren (z. B. Betondruck und Betonspritz- bzw. Betonschaumdruck) generiert werden.

Ein weiterer Aspekt der Erfindung betrifft ein Bewehrungsmodul aus Biege- und Schubbewehrung als Abstandshalter zwischen zwei benachbart anzuordnenden erfindungsgemäßen Schalungselementen, wobei das Bewehrungsmodul entsprechend den benötigten Abständen in eine räumliche Form gebracht ist (d. h. vorgeformt zur unmittelbaren Verwendung auf der Baustelle), so dass das Bewehrungsmodul zwischen den Schalungselementen auf einem Lehr- oder Schalungsgerüst anordenbar ist. Bevorzugt kann zur Herstellung des Bewehrungsmoduls eine flächige Bewehrungsmatte entsprechend den benötigten Abständen in eine räumliche Form gebracht werden (z. B. durch gezieltes Verbiegen und Beschneiden), so dass das Bewehrungsmodul zwischen den Schalungselementen auf einem Lehr- oder Schalungsgerüst anordenbar ist.

Die Bewehrungsmodule können dabei in ihrer Formung oder über entsprechende Strukturmerkmale derart ausgebildet sein, dass sie sich mit den Schalungselementen auf möglichst einfache Weise kombinieren lassen und dabei eine stabile Anordnung bilden. Die Idee hierbei ist, dass die Bewehrungsmodule bei einer Kombination nach einem Anordnen mit entsprechenden Schalungselementen ohne eine weitergehende aufwendige Bearbeitung bereits entsprechende Füllzonen zum unmittelbaren Auffüllen mit Ortbeton bereitstellen.

Vorzugsweise sind in dem Bewehrungsmodul Auflagezonen zum Einbringen von weiterer Biege- und Schubbewehrung (z. B. Verbundstahlstangen) und/oder von Rohrelementen zur thermischen Bauteilaktivierung angeordnet.

Ein weiterer Aspekt der Erfindung betrifft ein System zur Ausbildung von Bauwerksteilen, umfassend erfindungsgemäße Schalungselemente; und erfindungsgemäße Bewehrungsmodule, dazu eingerichtet, auf einem Lehr- oder Schalungsgerüst zur Ausbildung einer gemeinsamen Bauwerksteilstruktur angeordnet zu werden, wobei die Bewehrungsmodule eine homogene Füllzone zwischen den Schalungselementen definieren, welche zur Ergänzung mit Ortbeton vorgesehen ist, so dass die einzelnen Schalungselemente Aussparungskörper im Ortbeton bilden.

Als Bauwerksteile werden allgemein die einzelnen Teile eines Bauwerks bezeichnet. Dabei kann es sich insbesondere um Decken, Böden oder Wände des Bauwerks handeln. Die Bauwerksteile können sowohl tragend als auch nicht tragend sein. Bauwerksteile weisen üblicherweise eine mehr oder weniger gekrümmte flächige Struktur auf. Diese Flächenstrukturen können bevorzugt als homogenen Betonflächen in Stahlbetonbauweise ausgebildet werden. Die einzelnen Bauwerksteile können jedoch auch andere Materialen umfassen (heterogenes Materialsystem). Beispielsweise können die Schalungselemente auch mittels eines additiven Fertigungsprozesses aus einem von Beton abweichenden Material wie Lehm oder einem mineralischen Kunststoff ausgebildet sein und mit Beton kombiniert werden.

Das System ermöglicht durch den Einsatz eines großformatigen dreidimensionalen Betondrucks die Herstellung neuartiger Bauteile wie Deckenplatten und Wandelemente in Halbfertigteilbauweise, deren physikalische Eigenschaften (Akustik, Thermik und Mechanik) durch einen multimodalen computergestützten Entwurfs- und Analyseprozesse geometrisch und stofflich optimiert und im Anschluss durch eine automatische Druckpfad-Generation additiv hergestellt werden können. Die Bauweise kann sich dabei auf zwei Materialkomponenten beschränken: druckfeste mineralische Materialien, wie z. B. Betone, die in additiven Fertigungsverfahren verarbeitet werden können und hoch zugfeste Materialien, wie z. B. Bewehrungsstahl oder künstliche Fasern, die manuell oder automatisiert hinzugefügt werden. Das Verfahren erlaubt eine Materialeinsparung bei Beton von etwa 40 % für punktgestützte Betonflachdecken bei vergleichbaren Spannweiten und Belastungen und damit eine signifikante Verbesserung der Bilanzierung der bauteilbezogenen CO₂-Emissionen im Rahmen eines Life Cycle Assessments (LCA). Erreicht wird das im Wesentlichen durch die Bildung beispielsweise einer Rippendecke oder Hohlkörperdecke in Halbfertigteilbauweise, die aus einem einachsig oder zweiachsig gespannten Trägerrost und einer oder zwei Deckplatten bestehen kann.

Entsprechend betrifft ein weiter Aspekt der Erfindung ein zugehöriges Verfahren zur Ausbildung von Bauwerksteilen, umfassend ein Bereitstellen von vorgefertigten erfindungsgemäßen Schalungselementen; ein Bereitstellen von vorgefertigten erfindungsgemäßen Bewehrungsmodulen; ein Bereitstellen eines Lehr- oder Schalungsgerüstes; ein Anordnen der Schalungselemente und der Bewehrungsmodule auf dem Lehr- oder Schalungsgerüst zu einer gemeinsamen Bauwerksteilstruktur, wobei die Bewehrungsmodule eine homogene Füllzone zur Ergänzung mit Ortbeton definieren; ein Einbringen von weiterer Biege- und Schubbewehrung und/oder von Rohrelementen zur thermischen Bauteilaktivierung in die Bewehrungsmodule; und ein Ergänzen der Füllzonen mit Ortbeton, so dass die einzelnen Schalungselemente Aussparungskörper im Ortbeton bilden.

Die zur Herstellung notwendigen Schalungselemente (auch als Schalungskörper (SK) oder Aussparungskörper (AK) bezeichnet) bestehen dabei nicht wie im Stand der Technik aus Kunststoffen oder Metallen, sondern aus mineralischen Materialien, wie z. B. Betonen, welche in additiven Herstellungsverfahren verwendet werden. Entscheidend dabei ist die Fertigungsmöglichkeit einer Vielzahl geometrisch individueller, in einem vorgeschalteten computergestützten Entwurfs- und Planungsprozess optimierter Einzelelemente, die in der Gesamtheit eine hohe multimodale Performanz des Bauteils (z. B. Decke, Wand) in seiner räumlichen Disposition ergeben. Die additiv vorgefertigten Schalungselemente können am Einbauort auf einem Lehr- oder Schalungsgerüst angeordnet und nach dem Hinzufügen einer Bewehrung mit Ortbeton ergänzt werden.

Durch die additive Herstellung ist eine hoch-individualisierbare Fertigung der Schalungselemente möglich, die es zudem auch ermöglicht, im Sub-Zentimeterbereich geometrische Modifikationen zu generieren, die im Detail-Maßstab eine neuartige und integrative bauphysikalischen Optimierung erlaubt. Bei der Produktion der Schalungselemente durch 3DCP entsteht fast kein Abfall (Near-Zero-Waste) und zudem kann durch neuartige und hybride Materialmischungen der kreislaufwirtschaftlichen Effekt optimiert und sogar eine Wiederverwendbarkeit bei einem späteren Rückbau ermöglicht werden.

Die wesentliche Idee der vorliegenden Erfindung ist somit die Schalungselemente bereits in der Planungsphase mechanisch und bauphysikalisch im Hinblick auf multifunktionale Anforderungen hin zu optimieren und diese als permanente Schalungskörper mit einem hierfür angepassten Bewehrungskonzept auf der Baustelle als monolithische Gesamtstruktur durch eine Ergänzung mit Ortbeton in die fertige Bausubstanz hinterlassen und integrieren zu können. Durch die multiperformative Auslegung der Schalungselemente kann so das Raumklima, das vor allem durch die thermischen und akustischen Eigenschaften bestimmt wird, bereits in der Planungs- und Entwicklungsphase präzise und individual optimiert werden.

Untersuchungen weisen beispielsweise auf einen Verlust der Effektivität von herkömmlichen thermisch aktivierten Bauteilsysteme (TABS) in Deckenbauteilen in Kombination mit einfachen akustischen Deckensegeln hin. Ein Grund hierfür sind die durch die Deckensegel veränderten Konvektionsverhältnisse und der Übergang eines Radiationssystems in ein Konvektionssystem der TABS, welcher ebenfalls durch die akustischen Installationen verursacht wird. TABS können sehr effektiv sein, um den Innenraum zu klimatisieren. Dabei wird eine Flüssigkeit durch ein integriertes Kanalsystem in beispielsweise den Deckenplatten genutzt, um den Raum zu kühlen oder zu heizen. Die Positionierung der fluiden Kreisläufe innerhalb des Bauvolumens und das Verhältnis von Masse zur Oberfläche des Bauteils stellen dabei die zwei wesentlichen Variablen für die Bestimmung des thermischen Wärmeaustausch und/oder der Wärmespeicherkapazität dar. Für die Effektivität solcher TABS ist die Möglichkeit des unmittelbaren Energieaustausch mit dem Raum von großer Bedeutung. Jede Art von Verschattung, z. B. durch akustische Deckensegel, hat daher eine relativ hohe negative Auswirkung.

Ein erfindungsgemäßes System bietet demgegenüber einen besonders einfachen integrativen Lösungsansatz, der auf Decksegel und andere Maßnahmen zur nachträglichen Beeinflussung der Raumakustik verzichten kann. Es handelt sich somit um eine integrative und hochindividualisierbare Lösung von mechanischen und bauphysikalischen Performanzen durch automatisiert vorgefertigte Schalungselemente als Monomaterialsystem.

Das erfindungsgemäße Verfahren nutzt einen neuartigen holistischen geometrischen und rechnerischen Ansatz und ist höchst variabel gestaltbar. Es sind keine nachträglichen manuellen oder maschinellen Arbeiten an den erzeugten Bauwerksteilen (z. B Betonflächen an Decken und Wänden) notwendig, wobei sich die geometrischen Gestaltungsmöglichkeiten und die additive Herstellungsweise ganz grundsätzlich von anderen Systemansätzen unterscheiden. Während bisherige Verfahren Decken- oder Wandsysteme vertikal additiv herstellen, erfolgt bei dem erfindungsgemäßen Verfahren die Erzeugung der integrativen Schalungselemente horizontal als im Wesentlichen topfartig ausgebildete Grundkörper. Dadurch kann eine Aussparungszone der Schalungselemente mit oder ohne einen zusätzlichen Diffusor produziert werden. Gleichzeitig entsteht damit die Möglichkeit der beschriebenen Bewehrungsweisen der Gesamtbauteile. Durch die Bildung der Schalungselemente ergibt sich beispielsweise die Funktionsweise einer Rippendecke mit einer integrierten, auf den jeweiligen Raum und dessen Nutzung genau abgestimmten interaktiven thermischen und akustischen Wirkungsweise.

Ein weiterer Aspekt der Erfindung betrifft ein Verfahren zur Optimierung eines erfindungsgemäßen Systems zur Ausbildung von Bauwerksteilen umfassend ein Erzeugen einer ersten parametrischen Grundgeometrie für das gewünschte Bauwerksteil mit einem CAD-Werkzeug (engl. "computer-aided design", CAD); ein Ableiten eines vereinfachten Volumenmodells der parametrischen Grundgeometrie; ein Übermitteln des Volumenmodells in ein FEM-Werkzeug (Finite-Elemente-Methode, FEM) zur Durchführung einer bauphysikalischen und/oder mechanischen Optimierung; ein Rückübermitteln des im FEM-Werkzeug optimierten Volumenmodells an das CAD-Werkzeug; und ein Bestimmen einer optimierten Unterteilung des Bauwerksteils in entsprechende Schalungselemente und Bewehrungsmodule. Unter einem CAD- bzw. FEM-Werkzeug wird dabei insbesondere ein computerimplementiertes Hilfsmittel zur Durchführung einer entsprechenden Arbeits- und Simulationsmethode verstanden. Es kann sich hierbei beispielsweise um voneinander getrennte Werkzeuge (z. B. Rhinoceros/Grasshopper3D bzw. Comsol Multiphysics) oder um innerhalb eines gemeinsamen Werkzeugs integrierte Softwaremodule handeln. Auf die genaue Ausgestaltung der Werkzeuge kommt es dabei jedoch nicht an, vielmehr ist für das hier vorgestellte Verfahren allein die gemeinsame Verwendung von CAD- bzw. FEM-Werkzeugen zur gemeinsamen Optimierung eines erfindungsgemäßen Systems relevant.

Bei der ersten parametrischen Grundgeometrie kann es sich um eine reine Flächengeometrie ohne eine entsprechende Kassettierung (d. h. eine erfindungsgemäße Unterteilung der Flächengeometrie in entsprechende Schalungselemente und dazwischen anordenbare Bewehrungsmodule) handeln. In diesem Fall erfolgt eine Unterteilung des Bauwerksteils in entsprechende Schalungselemente und Bewehrungsmodule erst nach dem Durchlaufen des Optimierungsverfahrens. Vorzugsweise kann die erste parametrische Grundgeometrie jedoch auch bereits eine erste grobe Unterteilung bzw. Kassettierung umfassen, welche durch das erfindungsgemäße Verfahren optimiert wird. Diese erste Flächenzerlegung kann ebenfalls automatisiert erfolgen. Das erfindungsgemäße Optimierungsverfahren kann dabei in rekursiver Weise mehrfach durchlaufen werden, wobei eine optimierte Unterteilung als erste parametrische Grundgeometrie für einen neuen Verfahrensdurchlauf herangezogen werden kann.

Erfindungsgemäß wird im FEM-Werkzeug dabei mindestens der erste der folgenden Schritte ausgeführt: a) Bestimmung der normalen Absorptionskoeffizienten des Schallabsorbers und Optimierung der Schallabsorption zur Annäherung der dreidimensionalen Geometrie an eine einzustellende breitbandige Frequenzdomäne (akustische Eigenschaften - Schallunterdrückung); b) Bestimmung und Optimierung der Diffusität der aus der Diffusorzone gebildeten Struktur zur Schallverteilung (akustische Eigenschaften - Schallstreuung); c) vibroakustische Analyse und Optimierung der Übertragung des Luft- und/oder Körperschalls zur Minimierung der auftretenden Wirkungen (akustische Eigenschaften - Schallleitung); d) generative Evaluierung und Optimierung des Volumen-Oberflächen-Verhältnisses unter Einbeziehung einer variablen Positionierung von Rohrelementen zur thermischen Bauteilaktivierung innerhalb der Bewehrungsmodule zur Annäherung der dreidimensionalen Geometrie an eine einzustellende thermische Verteilung (thermische Eigenschaften - Wärme- bzw. Kälteverteilung); e) Bestimmung und Optimierung der mechanischen Eigenschaften des Volumenmodells (mechanische Eigenschaften - Kraft- bzw. Lastverteilung). Vorzugsweise erfolgt eine erfindungsgemäße Optimierung unter Berücksichtigung aller der voranstehend aufgeführten Aspekte.

Vorzugsweise berücksichtigt das FEM-Werkzeug bei der Ausführung von Schritten die Eigenschaften eines additiven Fertigungsprozesses und variiert dessen Betriebsparameter bei einer hiervon abhängigen Optimierung jeweils mit. Bei einem additiven Fertigungsprozesses kann es sich insbesondere um ein dreidimensionales Betondruckverfahren handeln. Als Betriebsparameter können dabei insbesondere die Eigenschaften des Fertigungsmaterials (z. B. Beton oder Lehm) sowie die spezifischen Anforderungen an einen konkreten Fertigungsprozess berücksichtigt werden.

Vorzugsweise werden aus dem CAD-Werkzeug automatisch Arbeitsvorgaben zur Erstellung der Schalungselemente mittels eines additiven Fertigungsprozesses und/oder zur Bereitstellung der Bewehrungsmodule abgeleitet. Die abgeleiteten Arbeitsvorgaben können beispielsweise eine automatische parametrische Programmierung der Druckpfade für ein vorgesehenes Betondruckverfahren, über welche die Geometrie der Schalungselemente durch eine zeitlich gesteuerte Materialdistribution iterativ aufgebaut wird, umfassen. Es kann sich jedoch auch um eine detaillierte Anleitung zur manuellen Bauausführung handeln.

Die statische Optimierung des erfindungsgemäßen Systems umfasst im Wesentlichen drei Phasen: Herstellungsphase, Einbauphase und Nutzungsphase. Ausgangspunkt der Optimierung ist die Nutzungsphase des Systems. Aus der Betrachtung der globalen Trag- und Gebrauchsfähigkeit beispielsweise eines Decken- und/oder Wandbausystems ergeben sich die topologischen Eigenschaften der einzelnen Elemente (Höhen, Breiten und Längen), die in ihrer Gesamtheit z. B. eine individuell geformtes Netz von Rippen des Gesamtbauteils erzeugen, welches die Spannweiten des Bauteils, die Lagerbedingungen (Punkt- oder Linienlagerung) und die Belastungen aus Ausbau und Nutzungen berücksichtigt. Sichergestellt werden muss hierbei ein den geltenden technischen Anforderungen entsprechendes globales Tragverhalten in Hinblick auf Standsicherheit und Gebrauchstauglichkeit.

Für die Herstellungsphase kann eine weitere Optimierung jedes einzelnen Schalungselements in Hinblick auf einen additiven Fertigungsprozess erfolgen. Entscheidend ist hierbei insbesondere eine Berücksichtigung der mechanischen Eigenschaften (Druck, Zug, und Scherverhalten) des verwendeten mineralischen Druckwerkstoffs im plastische Zustand. Dementsprechend erfolgt bevorzugt automatisch eine parametrische Programmierung der Druckpfade für das Betondruckverfahren, über welche die Geometrie der Schalungselemente durch eine zeitlich gesteuerte Materialdistribution iterativ aufgebaut wird. Der entwickelte Algorithmus kann dabei sowohl die lokale als auch globale Tragfähigkeit sowie das Stabilitätsversagen des Materialgefüges in der Fertigungsphase (plastischer Zustand, noch nicht vollständig ausgehärtet) als auch den hydrostatischer Druck aus dem vor Ort zugeführten Frischbeton (Ortbeton) in der Einbauphase (vollständig ausgehärtet) berücksichtigen. Für beide Belastungssituationen können somit die notwendigen individuellen geometrischen Verstärkungen (lokale Profilierungen) jedes Schalungselements integrativ ermittelt und in den Druckpfad integriert werden. Die geometrischen Nachbesserungen können unter anderem durch das Formen von kleinmaßstäblichen Säulen, Wölbungen oder mäandernden Strukturbildungen zur Verstärkung von lokalen und globalen Strukturzonen erfolgen.

Die entwickelte computergestützte Prozesskette aus Analyse, Geometriegenerierung und automatischer Übertragung des resultierenden Druckpfads in die Maschinensprache zur Fertigung für die mechanischen Optimierung der Schalungselemente kann neben dem Parameter Geometrie auch den Parameter Druckmaterial beinhalten. In der Analyse können in der dabei implementierten Finite-Elemente-Methode verschiedene Eigenschaften unterschiedlicher Druckwerkstoffe berücksichtigt werden. Damit können für die Parameter Tragfähigkeit, Eigengewicht, Ressourcenverbrauch und beinhaltete CO₂-Emission für jede Lösung optimiert werden.

Die Bauweise erfordert eine nachträgliche Bewehrung der Rippen bzw. der in situ zu betonierenden Schalungselemente der Gesamtkonstruktion. Dafür sind insbesondere zwei Bewehrungstypen für die Bewehrungsmodule vorgesehen: individuell vorgefertigte Bewehrungskörbe aus Stabstahl oder Faserbewehrung, und standardisierte Bewehrungsmatten aus Stahl oder Faserbewehrung. Die jeweils individuell zugehörigen Schalungselemente können in ihrer geometrischen Ausbildung die Lagesicherung der vorgefertigten Bewehrungskörbe und Bewehrungsmatten durch in die Geometrie der Schalungselemente integrierte Kontakt- bzw. Aufnahmestellen berücksichtigen. Die computergestützte Planung und Fertigung sowohl der Schalungselemente als auch der Bewehrungsmodule ermöglicht die Integration weiterer Stütz- und Hilfsstrukturen für das Positionieren und Befestigen von statischen, bauphysikalischen oder der technischen Gebäudeausrüstung zugehörigen Elementen. Ebenso können Positionshilfen zur Unterstützung der Ausrichtung der einzelnen Systemkomponenten untereinander implementiert werden.

Wie voranstehend bereits beschrieben, können die erfindungsgemäßen Schalungselemente als akustische Absorber- und Diffusorelemente fungieren, die sich als Einzelelement oder als integriertes Gesamtsystem insbesondere durch ihre detaillierte geometrische Ausprägung akustisch kalibrieren lassen, um je nach Nutzungsart des Raums definierte akustische Grenzwerte zu erreichen. Im Ergebnis kann die äquivalente Schallabsorptionsfläche von Räumen derart beeinflusst werden, dass alle nutzungsabhängigen notwendigen akustischen Grenzwerte eingehalten werden können. Die erfindungsgemäßen Schallabsorber basieren auf einer Anwendung der Wirkungsweise von Helmholtz-Resonatoren bei der geometrisch Definition und Planung der additiven Herstellung der Schalungselemente.

Hierfür wurde eine zyklische und iterative Prozesskette für die Generation und Optimierung des erfindungsgemäßen Systems entwickelt, die sich im Wesentlichen aus 4 Modulen zusammensetzen kann: computergestützte Erstellung der räumlich vernetzten Grundgeometrien der Bauwerksteile in einer CAD/BIM-Modellierungssoftware mit visueller Programmierschnittstelle (z. B. Rhinoceros/Grasshopper3D); automatisierte Generation der individuellen Schalungselemente vorzugsweise mit integrierten Helmholtz-Resonatoren und integriertem Diffusor; Validierung und Optimierung der Geometrie der Schalungselemente durch einen FEM-Software (z. B. Comsol Multiphysics); Rückkopplung der numerischen Evaluierung und Optimierung der akustischen Eigenschaften der Einzelelemente und des Gesamtsystems; und Generation des Quellcodes für eine robotische Fabrikation. Die einzelnen Funktionsweisen und Abläufe werden im Folgenden genauer erläutert.

Die Definierung der topologischen Eigenschaften der einzelnen Elemente (Höhen, Breiten und Längen) resultiert aus der Betrachtung der globalen Trag- und Gebrauchsfähigkeit beispielsweise eines Decken- und/oder Wandbausystems, bauphysikalischen Kriterien und gestalterischen Faktoren. Gestalterisch können z. B. Fluchtlinien einer Fassaden- und/ oder die Raumaufteilung mit bei einer Platzierung und Ausformung der einzelnen Elemente berücksichtigt werden. Um die Definierung der Schalungselemente weiter zu präzisieren und um die akustischen Zonen der Flächenstruktur bezüglich des ausgebildeten Raumes und seiner vorgesehenen Nutzung zu generieren, kann eine erste raumakustische Validierung, vorzugsweise unter der Anwendung von Raytracing-Algorithmen, erfolgen.

Hierbei können weitere geometrische Angaben der zu erzielenden raumbezogenen Absorptionsbereiche (z. B breitbandige Frequenzbereiche zwischen 100 bis 2000 Hz) und Streuungsbereiche in Hinblick auf bestimmte Raummoden (= Eigenfrequenzen eines Raumes) definiert werden. Aus diesen Evaluierungen können die Geometrien der horizontalen Leitkurven der Schalungselemente abgeleitet und vertikal extrudiert werden. Die Höhe der Schalungselemente kann dabei variabel an die notwendigen statischen Parameter angepasst werden. Die Variation der Grundkörper der Schalungselemente trägt dazu bei, die Diffusität des Schallfeldes im Frequenzbereich der Hochmitten zu erhöhen. Im kleineren Maßstab ist die im Druckprozess entstehende Oberflächenrauigkeit/Texturierung auch dazu geeignet, hohe Frequenzen diffus zu reflektieren und hierdurch z. B. die Entstehung von Flatterechos zu verhindern. Insbesondere sind folgende Realisierungen möglich:
- Die Extrusion kann geradlinig aber auch räumlich komplex gebildet werden.
- Die obere Ebene der Extrusion wird im Wesentlichen planar ausgebildet, kann aber auch in der Höhe variieren.
- Die Gesamthöhe der Extrusion kann bevorzugt 100 - 350 mm betragen.
- Die Ausbildung als geschlossener Hohlkörper (Aussparungshohlkörper) ist ebenfalls möglich.

Je nach Anwendung und der technischen Ausrüstung der additiven Fertigungszelle (Roboterarm, Gerüstsystem) können die Extrusionen in kleinere und vertikal aufeinanderfolgenden Druckebenen aufgeteilt werden. Dieser Prozess wird allgemein Slicing genannt. Die minimale/maximale Höhe der Druckebenen ist dabei abhängig von der technischen Ausrüstung und liegt typischerweise im Bereich von 3 bis 10 mm. Grundsätzlich sind kontinuierliche als auch diskontinuierliche Druckpfade umsetzbar. Für die Bildung der Absorber- und Diffusorgeometrien der Schalungselemente können die erstellten Druckebenen vertikal in Zonen zusammengefasst werden: einer Bodenzone, einer Absorberzone und einer Diffusorzone. Eine weitere Zone - die sog. Füllzone - beschreibt das gesamten Volumen der zwischen den einzelnen Schalungselementen ausgebildeten Zwischenräume der mit dem System zu realisierenden Flächenstruktur, welche auf der Baustelle mit Frischbeton (Ortbeton) vergossen bzw. aufgefüllt und somit ergänzt wird. Die jeweilige Höhe der Absorberzone kann parametrisiert aus einer vorhergehenden akustischen Validierung automatisch abgeleitet werden. Ein aus konstruktiven Überlegungen manuelles Setzen der Parameter ist ebenfalls möglich. Nach der Zonierung der einzelnen Schalungselemente erfolgt nach einer Optimierung eine finale Geometriedefinition der Gesamtheit der Schalungselemente und deren zugehöriger Zwischenräume.

Anhand der Angaben bezüglich der Höhe der Absorberzone kann eine geometrische Näherung von optimalen Geometrien für die erfindungsgemäßen Schallabsorber als Hohlräume in der Grundstruktur der Schalungselemente automatisiert generiert werden. Ein speziell dafür entwickelter Algorithmus zur Bestimmung von Resonanzfrequenzen für Helmholtz-Resonatoren, kann in ein entsprechendes computergestützte Planungs- und Fertigungswerkzeug für die Schalungselemente implementiert werden. Der Algorithmus kann die parametrisch veränderlichen geometrische Eigenschaften (z. B. Resonatorhals in Länge und Durchmesser, Anzahl und Form der Resonatorhälse und Resonatorvolumen) des Resonators variieren, um die Absorption bei Resonanz zu verändern und die Bandbreite des effektiven Absorptionsbereichs zu vergrößern. Dieses Verfahren erlaubt es einem Schalungselement je nach Anforderung unterschiedliche und/oder breitbandige Frequenzbänder zu absorbieren, indem eine variierende Anzahl und Geometrie von Feder-Volumen in Kombination mit eine variierende Anzahl und Geometrie von Massevolumen gekoppelt werden. Ein besonderes Potenzial bietet hierbei die räumliche Zusammenschaltung aus andersartig und/oder gleichartig abgestimmten akustischen Schallabsorbern. Dabei können unter Nutzung einer einheitliche Prozesskette für verschiedene Raumbereiche oder Nutzungsbereiche jeweils unterschiedliche akustischen Maßnahmen realisiert werden.

Beispielsweise können in den Schalungselementen mehrere Hohlräume ausgebildet werden, die alle in ihren geometrischen Eigenschaften variieren können und zudem jeweils zu den einzelnen Volumen eine große Varianz in der Anzahl der Flaschenhälse mit jeweils unterschiedlichen Öffnungsradien/-geometrien und Halslängen erzeugt werden können.

Eine Definition der 2- bzw. 3-Zonen der Schalungselemente erfolgt vorzugsweise vollständig automatisiert. Die Abläufe bei der Geometrieerzeugung der Schalungselemente werden in den folgenden Schritten am Beispiel eines Betondruckverfahrens (gilt für andere additive Fertigungsprozesse entsprechend) zusammengefasst und erläutert (Beispiel eines Verfahrens zur Erzeugung der Komponenten eines erfindungsgemäßen Systems):
(1) Die ersten 2 bis 3 Druckebenen - Höhe ca. 20 mm (je nach Größe variierend) - können benutzt werden, um einen tragfähigen Boden für die Schalungselemente auszubilden (Bodenzone). Die Wegeführung kann dabei bevorzugt polygon,- spiral-, radial-, oder schlangenförmig bzw. mäanderartig verlaufen.
(2) Um das Entstehen von Löchern oder der Bildung von Fugenspalten im Boden der Schalungselemente zu verhindern, können zudem die Abstände der einzelnen benachbarten, darunter und darüber liegenden Druckbahnen iterativ berechnet und die Abmessung der Druckbahnen entsprechend angepasst werden.
(3) Die Ausbildung der Absorberzone mit den integrierten Helmholtz-Resonatoren kann unter anderem durch sich einachsig oder zweiachsig verjüngende und mäanderartig auffächernde Druckbahnen erfolgen. Dabei können in der Breite, Höhe und Länge variierende Negativvolumen als Kammern (Feder) und unterschiedliche hohle Geometrien für die Resonatorhälse (Masse) gebildet werden. Die Höhe der Absorberzone sollte bevorzugt mindestens 50 mm betragen und kann bis zur Gesamthöhe der Extrusion des Schalungselements ausgebildet werden. Bei der Nutzung der gesamte Höhe entfällt die separate Diffusorzone und es entsteht eine Variation eines Schalungselements mit im Volumen des Grundkörpers integrierten Hohlkörpern. Ein Algorithmus kann bei der Bildung des Negativraumes dafür sorgen, dass alle Abstände der einzelnen benachbarten, darunter und darüber liegenden Druckbahnen iterativ berechnet und angepasst werden, um die Herstellbarkeit der Gesamtstruktur zu gewährleisten (Prüfung von Überhangsabständen).
(4) Die Verjüngung kann so gebildet werden, dass sich für die gewählte Höhe einer integrierten Absorberzone nach oben hin eine geschlossene Decke ergibt, indem nur die Resonatorhalsöffnungen (Einlassöffnungen der Schallabsorber) als ausgesparte Löcher ersichtlich sind. Die Ausbildung der Resonatorhälse bzw. Einlassöffnungen kann auch als Schlitzgeometrie ausgeführt werden.
(5) Im oberen Teil der Schalungselemente mit separater Diffusorzone kann eine dreidimensionale Wellenstruktur implementiert werden, die zum Ziel hat, einfallende Schallwellen zu zerstreuen und die unerwünschte Wirkung des ansonsten gleichförmig reflektierten Schalls zu vermindern. Die Diffusorwirkung kann durch ein mathematisches Verfahren berechnet und als geometrische Wellenstruktur automatisiert gebildet werden, wobei weitere geometrische Formen und Strukturen zur Ausbildung ähnlicher Zerstreuungseffekte mit integriert werden können. Ein Algorithmus kann hierbei auch die Herstellbarkeit der Struktur überprüfen und optimieren. Durch die hohe geometrische Flexibilität bei der Herstellung einer solchen separaten Diffusorzone können die Schallwellen sowohl quantitativ als auch qualitativ im Raum entweder gleichmäßig oder zielgerichtet verteilt werden. Die Bildung von Interferenz-Effekten, die durch die Überlagerung der Reflexionen aufgrund unterschiedlichen Vertiefungen und Muster entstehen, können dabei vorteilhaft mit in das Design integriert werden.

Die beschriebene Geometrieerzeugung basiert u. a. auf der Implementierung einer mathematischen Berechnung akustischer Parameter die näherungsweise die erforderlichen Resonanzfrequenzen ermitteln und daraus die Geometrie der Schalungselemente ableiten bzw. generieren kann. Des Weiteren kann analog hierzu eine thermische Aktivierung der Flächen berücksichtigt werden. Die Optimierungen hinsichtlich dieser beiden und eventueller weiterer Optimierungsparameter erfolgt vorzugsweise parallel, so dass diese gleichzeitig optimiert werden können. Selbstverständlich kann eine iterative Optimierung jedoch auch über mehrere Optimierungsdurchläufe mit jeweils einzeln oder in bestimmten Gruppen zusammenhängend optimierten Parametern nacheinander erfolgen.

Die akustische Berechnung kann dabei insbesondere auf der Annahme von einfachen Grundkörpern zur Bestimmung der Resonanzfrequenz und der Resonatorvolumen sowie einfachen Geometrien für die Resonatorhälse beruhen. Da jedoch durch die Freiheiten der additiven Herstellung auch komplexerer Absorber und Diffusoren untersucht und angewendet werden können, wird für die Ermittlung der exakten Absorptions- und Reflexionswerte der einzelnen und im Verbund wirkenden Schalungselemente erfindungsgemäß eine FEM-Simulation nachgeschalten, mit dem Ziel, eine weitere Optimierung der akustischen Performanz der Schalungselemente zu erreichen. Die Optimierungsprozesse erfolgen dabei bevorzugt in Kombination mit der mechanischen und thermischen Validierung der einzelnen Systemkomponenten.

Am Beispiel einer akustischen Optimierung werden im Folgende die hierbei vorzugsweise durchgeführten Schritte aufgeführt (Beispiel eines erfindungsgemäßen Verfahrens zur akustischen Optimierung eines erfindungsgemäßen Systems):
(1) Aus einer parametrischen Geometrieerzeugung für ein gewünschtes Bauwerksteil oder dessen als Startwert zur Optimierung vorgegebene Zerlegung in einzelne Schalungselemente kann zunächst automatisiert ein vereinfachtes akustisches Negativ-Volumenmodell abgeleitet werden. Zusammen mit weiteren numerischen Parametern kann dieses Volumenmodell anschließend automatisiert in eine FEM-Software (z. B. Comsol Multiphysics) übermittelt werden. Die numerische Parameter setzen sich dabei vorzugsweise aus Indikatoren für die umzusetzende Geometrie sowie entsprechenden Material- und Geometrieeigenschaften zusammen, die jeweils den einzelnen Volumenkörper (z. B. Resonatorvolumen, Resonatorhälse, Strömungskanal etc.) zugewiesen werden können. Dieser topologischen Eigenschaften können automatisiert an die FEM-Software (oder ein anderes geeignetes FEM-Werkzeug) übertragen werden und dort den geometrischen Prototypen für die FEM-Simulation generieren. Durch eine automatisierte Verknüpfung können in hoher Geschwindigkeit beliebige Variationen für eine iterative Suche nach einer Näherungslösung generiert werden.
(2) Zur Bestimmung der normalen Absorptionskoeffizienten des Schallabsorbers (bzw. der wirksamen Oberfläche der Resonatorgeometrie) können die einfallenden und gestreuten Druckfelder (engl. "pressure fields") simuliert werden. Dabei kann insbesondere das Absorptionsverhalten berechnet und eventuell zusätzlich graphisch visualisiert werden.
(3) Dieser reziproke Prozess kann mehrmals mit leichten geometrischen Variationen unter Anwendung einer Brute-Force-Methode oder eines anderen hierfür geeigneten Verfahrens (z. B. numerischen Optimierungsverfahren anhand der Least-Squares-Methode) für eine Optimierung automatisiert iteriert werden, mit dem Ziel einer bestmöglichen Annäherung der dreidimensionalen Geometrie an die gewünschten breitbandige Frequenzdomäne.
(4) Ein ähnlicher Prozess kann gleichzeitig oder nachfolgend die Diffusität der aus der Diffusorzone gebildeten Struktur untersuchen und optimieren. Dies kann ebenfalls mit Hilfe eines iterativen Näherungsverfahrens auf der Basis von Evolutions- bzw. Brute-Force Algorithmen erfolgen. Dabei können z. B. das Interferenzverhalten von Schallwellen unterschiedlicher Frequenzen in Abhängigkeit von ihrer jeweiligen Wellenlänge und ein sich durch Vertiefungen resultierend aus einer Musterbildung innerhalb der Diffusionszone ergebender Phasenversatz ermittelt und berücksichtigt werden. Die Musterbildung bedingt Auslöschungen und Verstärkungen des Interferenzverhaltens der reflektierten Schallwellen. Druckgradienten der neu entstehenden Wellen können dabei exakt in unterschiedliche Richtungen gelenkt werden.
(5) Vibroakustische Berechnungen können zur Untersuchung der Übertragung des Luft- bzw. Körperschalls zwischen einzelnen Bauteilen (wie z. B. den Geschossplatten) genutzt werden. Hier kann das akustische Verhalten (z. B. hinsichtlich Luftschall, Trittschall und Schwingungsdämpfung) in der Füllzone, insbesondere unter Anwendung von verschiedenen Füllmaterialien (z. B. Porenbeton) und in Kombination mit den Masse-Feder-Systemen von integrierten erfindungsgemäßen Schallabsorbern untersucht und verbessert werden.
(6) Nach der numerischen Optimierung der Schalungselemente können die modifizierten geometrischen Variablen in Echtzeit numerisch zurück in eine CAD/BIM-Modellierungssoftware (z. B. Rhinoceros/Grasshopper3D) gespeist werden. Die Variablen der Geometrieerzeugung können dann durch die optimierten Werte belegt werden und somit die Grundlage der akustisch optimierten Schlussgeometrie der Schalungselemente bilden.

Das beschriebene Verfahren kann anschließend iterativ wiederholt werden, um weitere mechanische, bauphysikalische und gestalterische Anpassungen vorzunehmen oder um Gestaltungsvarianten zu erzeugen. Durch einen weiteren entwickelten Algorithmus kann aus dem Ergebnis automatisiert ein Quellcode/Maschinencode für die Fertigung der Schalungselemente generiert werden. In diesem Prozessschritt können weitere Fabrikationsparameter, wie z. B. die Druckgeschwindigkeit, das Druckvolumen, die materialabhängigen plastischen Besonderheiten der Druckmischung und die technischen Kapazitäten der jeweiligen robotischen Fertigungsstelle, mit in den generativen Herstellungsprozess der Schalungselemente integriert werden. Entsprechendes gilt für eine automatisierte Herstellung der erfindungsgemäßen Bewehrungsmodule.

Für ein thermische Aktivierung der mit einem erfindungsgemäßes System realisierten Flächengeometrien werden im Wesentlichen zwei Maßnahmen eingesetzt, um eine integrierte Betonkernaktivierung parallel zu den wirkenden akustischen Maßnahmen der Schalungselemente zu ermöglichen: Dies ist zum Ersten eine variable Positionierung der fluiden Kreisläufe innerhalb der Füllzone (z. B. durch die Generation von variablen Abstandshalter in den Bewehrungsmodulen) und zum Zweiten ein lokal und global modifizierbares Verhältnisse von der geometrischen Masse der Füllzone zu der Oberflächenvergrößerung beispielsweise einer integrierten Diffusorzone der erfindungsgemäßen Schalungselemente. Durch eine generative Evaluierung und Optimierung dieser beiden geometrischen Eigenschaften können für unterschiedliche Raumzonen verschiedene Wärmespeicher- und/oder Wärmeaustauscheffekte generiert werden.

Die wesentlichen Schritte für eine thermische Optimierung unterscheiden sich aufgrund der im Wesentlichen gleichen numerischen Ansätze lediglich bei den zu simulierenden physikalischen Prozessen und der entsprechender Simulationsparameter. Die Optimierungsprozesse erfolgen dabei bevorzugt in Kombination mit der mechanischen und akustischen Validierung der einzelnen Systemkomponenten.

Abhängig von der ausgebildeten Oberflächen- und Strukturbildung der Absorber- und Diffusorzone der einzelnen Schalungselemente kann zunächst näherungsweise der Wärmedurchgangskoeffizient und/oder die Wärmekapazität der sich ergebenden Füllzone berechnet und dann zumindest halbautomatisiert in eine FEM-Software (z.B. Comsol Multiphysics) übertragen werden. In der FEM-Software kann anschließend der Wärmeaustausch- bzw. Wärmedurchgangskoeffizienten des Gesamtsystems (z. B einer Decke und/oder von Wänden) modular überprüft werden.

Diese thermische Analyse kann nach der mechanischen und akustische Prüfung durchgeführt werden. Darüber kann die Generation der Leitkurven als auch der Bildung der Höhe der Diffusorzone in Abhängigkeit von den vorherigen Optimierungen mit angepasst werden. Die Erstellung eines sogenannten Multiphysikmodells erlaubt auch eine parallele Optimierung der einzelne Parameter innerhalb eines einzigen Optimierungsdurchlaufs.

Am Beispiel einer thermischen Optimierung werden zur Verdeutlichung im Folgenden die vorzugsweise anzupassenden Schritte eines entsprechenden Verfahrens aufgeführt (Beispiel eines erfindungsgemäßen Verfahrens zur thermischen Optimierung (thermischen Aktivierung) eines erfindungsgemäßen Systems):
(1) Prüfung des Mikroklimas (z. B über Predicted Mean Votes und Predicted Percentage of Dissatisfaction) der Gebäudegeometrie (z. B. mittels Rhinoceros/Revit). Die Identifizierung der thermischen Raumzonen (z. B. durch Erstellung von thermischen Heatmaps des untersuchten Geschosses) kann sich ebenfalls auf die Definition der Dimensionierung der Schalungselemente auswirken.
(2) Um diese erste geometrische Annäherung weiter zu validieren, kann auch hierzu ein vereinfachtes Volumenmodell der Schalungselemente und der Füllzone in einem FEM-Werkzeug (z. B. Comsol Multiphysics) untersucht werden. Dabei kann ein geometrisch variabler Ausschnitt (z. B. einer Wand und/oder eines Deckenbauteils) analog zu den bereits voranstehend für eine akustische Optimierung beschriebenen Schritten zusätzlich mit weiteren numerischen Informationen für einen Versuchsaufbau in Echtzeit übermittelt werden (Modularisierung der Gesamtstruktur).
(3) In dem FEM-Werkzeug kann eine generative Evaluierung und Optimierung des Volumen-/Oberflächenverhältnisses unter Einbeziehung einer variablen Positionierung von Rohrelementen zur thermischen Bauteilaktivierung erfolgen. Die Optimierungsparameter sind hierbei insbesondere die Wärmespeicherkapazität und der Wärmedurchgangskoeffizient bei den Strukturen. Die veränderbaren Variablen bei der Optimierung sind z. B. die Breite, Länge und Höhe als auch die globale Unterteilung und Distribution der Schalungselemente sowie der Füllzone. Die optimale Positionierung der einzelnen Rohrelemente bezüglich der angestrebten Wärmeübertragungswerte können ebenfalls in diesem Schritt ermittelt und als numerische Daten exportiert werden (Ermittlung der X- ,Y- , Z-Koordinaten des Querschnittmittelpunktes der Installation). Eine entsprechende Visualisierung kann vorgesehen sein.
(4) Auch bei der thermischen Optimierung können die numerischen Informationen aus dem FEM-Werkzeug in Echtzeit numerisch zurück in eine CAD/BIM-Modellierungssoftware (z. B. Rhinoceros/Grasshopper3D) gespeist werden, um die Dimensionierung und Unterteilung der Schalungselemente und somit auch das geometrische Volumen der Füllzone lokal und global optimal anzupassen. Die Attribute der Oberflächenvergrößerung von integrierten Diffusoren können in diesem Schritt modifiziert werden. Die numerischen Anweisungen für Positionierung der thermischen Kreisläufe können in ein algorithmisches CAD-Werkzeug übermittelt und implementiert werden, um die geometrischen Auflagezonen für die Bewehrungsmodule automatisiert zu generieren.

Weitere bevorzugte Ausgestaltungen der Erfindung ergeben sich aus den in den jeweiligen Unteransprüchen genannten Merkmalen.

Die verschiedenen in dieser Anmeldung genannten Ausführungsformen und Aspekte der Erfindung sind, sofern im Einzelfall nicht anders ausgeführt, mit Vorteil miteinander kombinierbar.

### Beschreibung der Figuren

Die Erfindung wird nachfolgend in Ausführungsbeispielen anhand der zugehörigen Zeichnung erläutert. Es zeigen:
- FIG. 1: beispielhafte schematische Darstellungen erfindungsgemäßer Schallabsorber (zugleich einer ersten Ausführungsform erfindungsgemäßer Schalungselemente),
- FIG. 2: beispielhafte schematische Darstellungen erfindungsgemäßer Schallabsorber nach FIG. 1 in einer zweiten Ausführungsform erfindungsgemäßer Schalungselemente,
- FIG. 3: eine beispielhafte schematische Darstellung der vertikalen Abwicklung der Druckebenen bei einem additiven Verfahren zur Herstellung von erfindungsgemäßen Schalungselementen;
- FIG. 4: eine beispielhafte schematische Darstellung eines erfindungsgemäßen Schalungselements als Schnittmodell,
- FIG. 5: beispielhafte schematische Darstellungen erfindungsgemäßer Bewehrungsmodule,
- FIG. 6: eine schematische Darstellung der Durchführung eines erfindungsgemäßen Verfahrens zur Ausbildung von Bauwerksteilen,
- FIG. 7: eine beispielhafte schematische Explosionszeichnung eines mit einem erfindungsgemäßen System bereitgestellten Deckenabschnitts ohne Ortbeton,
- FIG. 8: eine Darstellung eines mit einem erfindungsgemäßen System bereitgestellten Deckenabschnitts vor einer Ergänzung mit Ortbeton,
- FIG.9: eine schematische Darstellung eines beispielhaften Prozessablaufs bei einer erfindungsgemäßen Optimierung;
- FIG. 10: eine beispielhafte schematische Darstellung eines erfindungsgemäßen Verfahrens zur Ausbildung von Bauwerksteilen, und
- FIG. 11: eine beispielhafte schematische Darstellung eines erfindungsgemäßen Verfahrens zur Optimierung eines erfindungsgemäßen Systems zur Ausbildung von Bauwerksteilen.

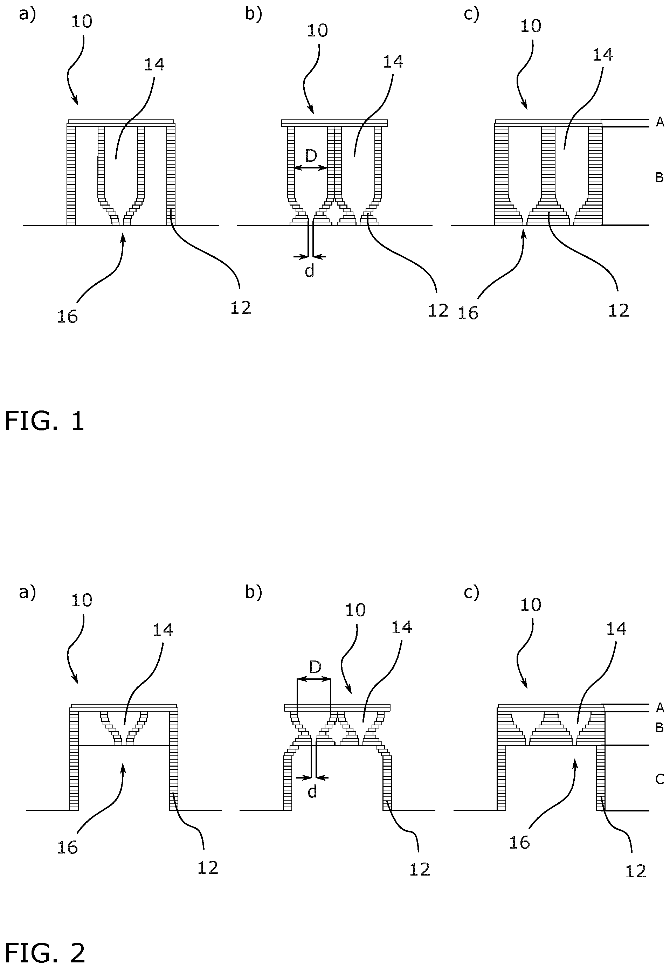

Figur 1 zeigt beispielhafte schematische Darstellungen erfindungsgemäßer Schallabsorber 10 (zugleich einer ersten Ausführungsform erfindungsgemäßer Schalungselemente 30). Die gezeigten Schallabsorber 10 umfassen jeweils einen Grundkörper 12 mit einem darin eingeschlossenen Hohlraum 14, wobei der Hohlraum 14 sich von einer Einlassöffnung 16 mit einem Einlassdurchmesser d auf einen maximalen Innendurchmesser D größer als der Einlassdurchmesser d erweitert und einen Helmholtz-Resonator zur Schallunterdrückung ausbildet.

Unter a) ist eine Ausführungsform mit einer offenen Rahmenstruktur des Grundkörpers 12 gezeigt. Bei dem unter b) gezeigten Schallabsorber 10 weist der Grundköper im Wesentlichen die Form des Hohlraums 14 auf, wobei der Grundkörper 12 den Hohlraum 14 annähernd formschlüssig umschließt. In der unter c) gezeigten Ausführungsform ist der Hohlraum 14 in einen massiven Vollkörper eingebettet. Die dargestellten Ausführungsformen stellen lediglich einzelne Beispiele für mögliche Ausführungsformen dar. Insbesondere können die Form des Hohlraums sowie dessen Aufweitung ausgehend von der Einlassöffnung 16 (Resonatorhalsgeometrie) von der gezeigten Resonatorform abweichen.

Eine Herstellung des Schallabsorbers 10 kann schichtweise mittels streifenförmig aufgebrachtem dreidimensionalen Betondruck unter Ausbildung einer selbsttragenden Struktur erfolgen. Die gezeigten Schallabsorber 10 stellen aufgrund ihres inneren Aufbaus gleichzeitig eine erste Ausführungsform erfindungsgemäßer Schalungselemente 30 dar. Eine solche Ausführungsform wird allgemein als Hohlkörper bzw. Hohlkörperelement bezeichnet. Die entsprechenden Schalungselemente 30 sind zeichnen sich insbesondere dadurch aus, dass sie lediglich einen einfachen Aufbau mit einer Bodenzone A und einer Absorberzone B aufweisen. Die Elemente können weitgehend neutral in eine freiliegende Oberfläche eines Bauerwerksteils integriert werden und dort aufgrund ihrer inneren Hohlraumstrukturen zugleich als Schallabsorber und als Aussparungskörper fungieren. Werden solche Schalungselemente 30 in einer Decke als Bauwerksteil integriert, dann wird diese im Allgemeinen als Hohlkörperdecke bezeichnet.

Figur 2 zeigt beispielhafte schematische Darstellungen erfindungsgemäßer Schallabsorber 10 nach FIG. 1 in einer zweiten Ausführungsform erfindungsgemäßer Schalungselemente 30. Hinsichtlich der Schallabsorber 10 gelten die Bezugszeichen und deren jeweilige Zuordnung entsprechend. Im Unterschied zu den Darstellungen nach Figur 1 schließt sich an die Absorberzone B hierbei eine einseitig offene Aussparungszone C an. Entsprechende Schalungselemente 30 werden auch als Kassettenkörper/-elemente oder einfach als Kassetten bezeichnet. Durch die integrierten Schallabsorber 10 handelt es sich im weiteren Sinne jedoch ebenfalls um Hohlkörperelemente. Auch diese Ausführungsform von Schalungselementen kann in eine freiliegende Oberfläche eines Bauwerksteils integriert werden, wobei sich durch die Aussparungszone C ein Bauwerksteil mit einer auffällig strukturierten Oberfläche ergibt. Beispielsweise werden entsprechend hergestellte Decken als Kassettendecken bezeichnet.

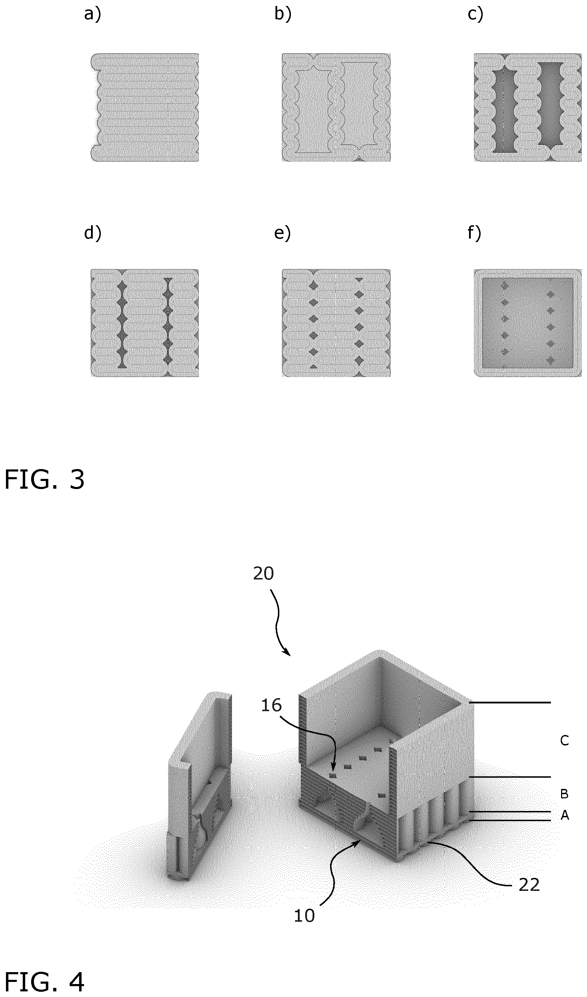

Figur 3 zeigt eine beispielhafte schematische Darstellung der vertikalen Abwicklung der Druckebenen bei einem additiven Verfahren zur Herstellung von erfindungsgemäßen Schalungselementen. Insbesondere kann es sich hierbei um einen additiven Fertigungsprozesses handeln, bei dem eine Ausbildung der Schalungselemente jeweils schichtweise mittels streifenförmig aufgebrachtem dreidimensionalen Betondruck unter Ausbildung einer selbsttragenden Struktur erfolgt. Dabei ist unter a) zunächst eine mäanderförmige Ausbildung eines Bodens für das gezeigte Schalungselement gezeigt. Bei der linksseitig zu erkennenden Aussparung kann es sich um ein zu den einzelnen Bewehrungselementen korrespondierendes Merkmal zur Vereinfachung der gegenseitigen gemeinsamen Ausrichtung der Element handeln. Weitere oder anders ausgebildete Strukturen können dafür optional vorgesehen sein. Unter b) bis e) ist für verschiedene Höhenschnitte abgebildet, wie durch eine Breitenvariation beim Schichtauftrag Hohlräume integriert und deren Form definiert werden kann. Die Größe der Hohlraumbereiche nimmt dabei mit Höhe der Schnittebene (d. h. mit zunehmender Elementhöhe) ab, wobei wie unter e) gezeigt in der obersten Ebene der Absorberzone beispielhaft jeweils eine Reihe von vier nebeneinander angeordneten Einlassöffnungen für die zwei ausgebildeten Hohlräume zu erkennen ist. Unter f) ist schließlich die Ausbildung einer erfindungsgemäßen Aussparungszone oberhalb der Absorberzone gezeigt.

Figur 4 zeigt eine beispielhafte schematische Darstellung eines erfindungsgemäßen Schalungselements 20 als Schnittmodell. Das gezeigte Schalungselement 20 umfasst eine Bodenzone A zur Bereitstellung eines tragfähigen Bodens 22 und eine auf der Bodenzone A angeordnete Absorberzone B mit mindestens einem erfindungsgemäßen Schallabsorber 10 zur Schallunterdrückung, und eine auf der Absorberzone B angeordnete Aussparungszone C zur Bereitstellung eines Aussparungskörpers. Die Einlassöffnung 16 des Schallabsorbers 10 weist in Richtung der Aussparungszone C. Eine innere Wandung des Aussparungskörpers kann eine Strukturierung zur diffusen Streuung von reflektiertem Schall aufweisen. Vorzugsweise erfolgt eine Herstellung des Schalungselements 20 schichtweise mittels streifenförmig aufgebrachtem dreidimensionalen Betondruck unter Ausbildung einer selbsttragenden Struktur.

Alternativ hierzu kann auch auf eine Aussparungszone C zur Bereitstellung eines Aussparungskörpers verzichtet werden und stattdessen können die von den Helmholtz-Resonatoren ausgebildeten Hohlräume und/oder weitere im Grundkörper des Schallabsorbers 10 angeordnete abgeschlossene Hohlräume oder offene Strukturen durch eine entsprechend dimensionierte Auslegung auch zur Bereitstellung eines Aussparungskörpers verwendet werden (vgl. Hohlkörperelemente in Figur 1). Beispielsweise können die Grundkörper der in Figur 1 gezeigten Ausführungsformen einer Anordnung erfindungsgemäßer Schallabsorber 10 auch unmittelbar als erfindungsgemäße Schalungselemente 20 ausgebildet bzw. angesehen werden. Die Aussparungszone C kann somit räumlich mit der Absorberzone B zusammenfallen (vgl. Figur 1 a)) oder es kann vollständig auf die Ausbildung einer separaten Aussparungszone C (d. h. zusätzlich zu den bereits durch die einzelnen Schallabsorber 10 bereitgestellten Hohlräumen) verzichtet werden (vgl. Figur 1 b) und c)).

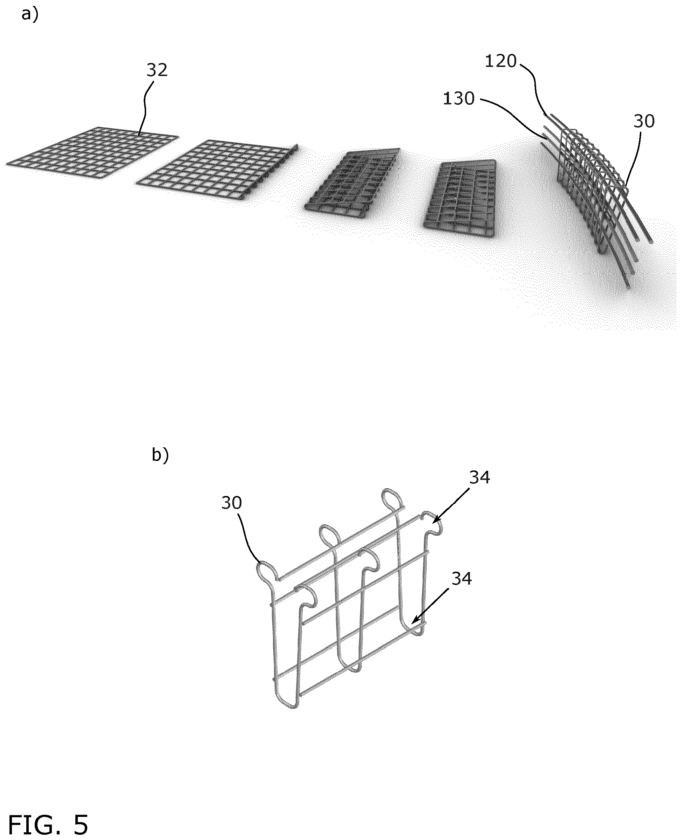

Figur 5 zeigt beispielhafte schematische Darstellungen erfindungsgemäßer Bewehrungsmodule 30. Ein Bewehrungsmodul 30 aus Biege- und Schubbewehrung ist als Abstandshalter zwischen zwei benachbart anzuordnenden erfindungsgemäßen Schalungselementen 20 ausgebildet, wobei das Bewehrungsmodul 30 entsprechend den benötigten Abständen in eine räumliche Form gebracht ist, so dass das Bewehrungsmodul 30 zwischen den Schalungselementen 20 auf einem Lehr- oder Schalungsgerüst 112 anordenbar ist. Bevorzugt kann zur Herstellung des Bewehrungsmoduls 30 vorzugsweise eine flächige Bewehrungsmatte 32 entsprechend den benötigten Abständen vorgeformt werden, so dass das Bewehrungsmodul 30 zwischen den Schalungselementen 20 auf einem Lehr- oder Schalungsgerüst 112 anordenbar ist. Unter a) ist das Vorformen durch Biegen einer flächigen Bewährungsmatte 32 gezeigt. Das Vorformen kann jedoch auf jede andere geeignete Art von Prozessierung zur Vorformung eines Bewehrungsmoduls erfolgen, beispielsweise durch Erzeugen einer entsprechenden Struktur mittels Kunststoff- oder Metalldruck. Eine weitere Ausführungsform eines vorgeformten Bewährungsmoduls 30 ist unter b) gezeigt.

Vorzugsweise sind in dem Bewehrungsmodul 30 Auflagezonen 34 zum Einbringen von weiterer Biege- und Schubbewehrung 120 (z. B. Verbundstahlstangen) und/oder von Rohrelementen 130 zur thermischen Bauteilaktivierung angeordnet. Durch die Auflagezonen 34 kann eine einfache Fixierung bzw. Anordnung der einzubringenden weiteren Biege- und Schubbewehrung 120 und/oder der Rohrelementen 130 zur thermischen Bauteilaktivierung erreicht werden. Dies vereinfacht das schnelle und zuverlässige Zusammenfügen von Schalungselementen 20, Bewehrungsmodulen 30, weiterer Biege- und Schubbewehrung 120 und/oder von Rohrelementen 130 zur thermischen Bauteilaktivierung.

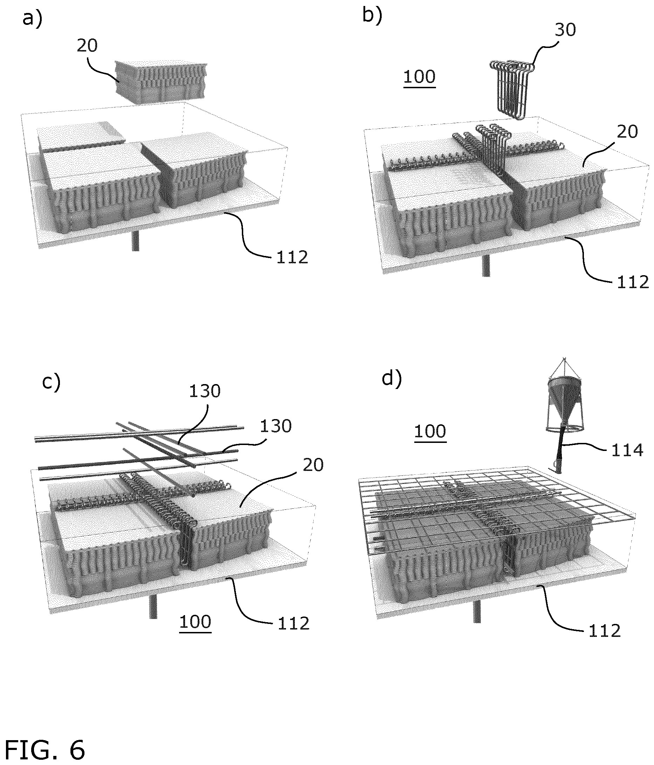

Figur 6 zeigt eine schematische Darstellung der Durchführung eines erfindungsgemäßen Verfahrens zur Ausbildung von Bauwerksteilen 110. Das Verfahren umfasst ein Bereitstellen von vorgefertigten erfindungsgemäßen Schalungselementen 20; ein Bereitstellen von vorgefertigten erfindungsgemäßen Bewehrungsmodulen 30; und ein Bereitstellen eines Lehr- oder Schalungsgerüst 112. Unter a) ist das Anordnen der Schalungselemente 20 und unter b) das Anordnen der Bewehrungsmodule 30 auf dem Lehr- oder Schalungsgerüst 112 zu einer gemeinsamen Bauwerksteilstruktur gezeigt, wobei die Bewehrungsmodule 30 eine homogene Füllzone zur Ergänzung mit Ortbeton 114 definieren. Unter c) ist ein Einbringen von weiterer Biege- und Schubbewehrung 120 und/oder von Rohrelementen 130 zur thermischen Bauteilaktivierung in die Bewehrungsmodule 30 dargestellt. Zur Vereinfachung des Einbringens können für die Lagerung der weiteren Biege- und Schubbewehrung 120 und/oder der Rohrelemente 130 spezielle Auflagezonen 34 in den Bewehrungsmodulen 30 vorgesehen sein. Schließlich ist unter d) eine Ergänzung der Füllzone mit Ortbeton 114 gezeigt.

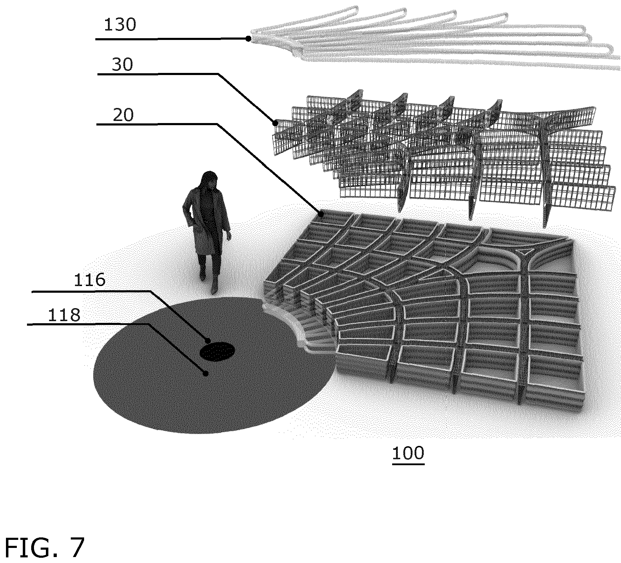

Figur 7 zeigt eine beispielhafte schematische Explosionszeichnung eines mit einem erfindungsgemäßen System 100 bereitgestellten Deckenabschnitts ohne Ortbeton 114. Das System 100 zur Ausbildung von Bauwerksteilen 110 umfasst erfindungsgemäße Schalungselemente 20; und erfindungsgemäße Bewehrungsmodule 30, dazu eingerichtet, auf einem Lehr- oder Schalungsgerüst 112 zur Ausbildung einer gemeinsamen Bauwerksteilstruktur angeordnet zu werden, wobei die Bewehrungsmodule 30 eine homogene Füllzone zwischen den Schalungselementen 20 definieren, welche zur Ergänzung mit Ortbeton 114 vorgesehen ist, so dass die einzelnen Schalungselemente 30 Aussparungskörper im Ortbeton 114 bilden.

Im gezeigten Beispiel handelt es sich bei dem Bauwerksteil 110 um eine Decke. Die vom Bauwerksteil ausgebildete Betonflächenstruktur liegt auf einer Stütze 116 auf, wobei die Stütze 116 im Inneren eine Durchstanzzone 118 aufweist. Über die Durchstanzzone 118 kann beispielsweise ein Anschluss einer in die Bewehrungsmodule 30 des Bauwerksteils 110 integrierten thermischen Kanalführung (Rohrelemente 130) erfolgen. Hierbei ist jedoch zu beachten, dass die Explosionszeichnung aus Gründen einer besseren Darstellbarkeit bzgl. der Ober- und Unterseite verkehrt herum dargestellt ist, so dass die offene Flächen der einzelnen Aussparungskörper bei den gezeigten Schalungselementen 20 nach oben und nicht wie im vorgesehenen Zustand nach unten ausgerichtet sind.

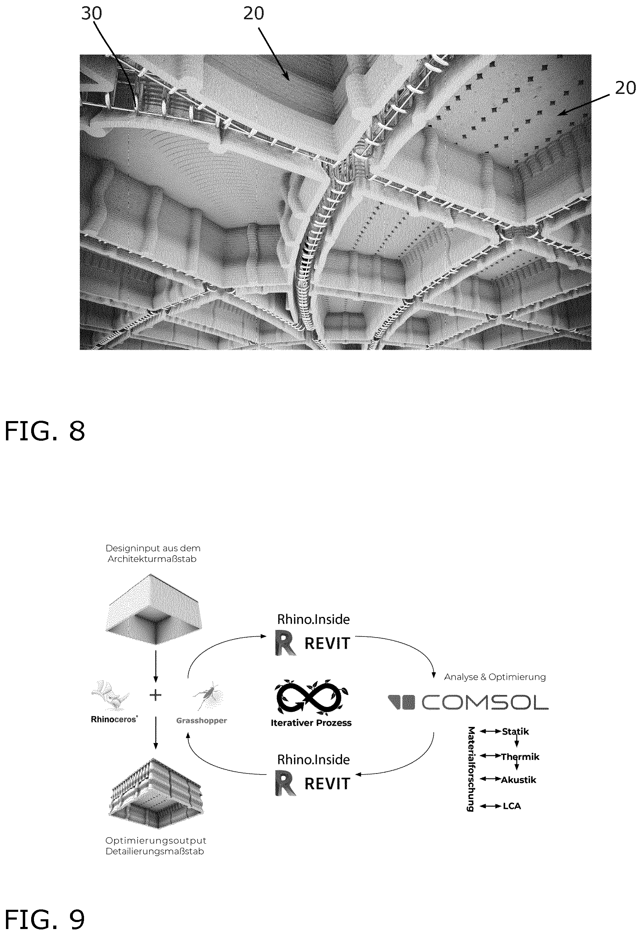

Figur 8 zeigt eine Darstellung eines mit einem erfindungsgemäßen System 100 bereitgestellten Deckenabschnitts vor einer Ergänzung mit Ortbeton 114. Die Anordnung wurde hierbei richtig herum von unten betrachtet abgebildet. Eine Vielzahl unterschiedlich geformter Schalungselemente 20 wurde hierbei über passend ausgebildet Bewehrungsmodule 30 zu einem gemeinsamen Deckenabschnitt angeordnet. In der rechten Hälfte sind die Einlassöffnungen der darin erfindungsgemäß integrierten Schallabsorber zu erkennen. Für eine Ergänzung mit Ortbeton ist in diesem Fall zunächst die Unterseite der Decke mit einer entsprechenden temporären Schalung zu versehen. Dadurch kann ein Ergänzen der Zwischenräume mit den darin angeordneten Bewehrungsmodulen 30 mit Ortbeton von oberhalb der Struktur (d. h. vom Hintergrund der Bildebene ausgehend) durch einfaches Betongießen erfolgen. Anschließend kann die für das Auffüllen benötigte Verschalung wieder entfernt werden. An den Stellen, wo in der gezeigten Figur die einzelnen Bewehrungsmodule 30 zu erkennen sind, sind dann massive Betonrippen vorhanden, in denen sowohl die Bewehrungsmodule 30 als auch die angrenzenden Schalungselemente 20 integriert sind.

Figur 9 zeigt eine schematische Darstellung eines beispielhaften Prozessablaufs bei einer erfindungsgemäßen Optimierung. Bei den darin angegeben Programmen handelt es sich lediglich um Beispiele. Insofern ist das erfindungsgemäße Optimierungsverfahren nicht auf die darin konkret genannten Programme beschränkt. Die Darstellung dient insbesondere zur Verdeutlichung des iterativen Charakter des erfindungsgemäßen Optimierungsverfahrens.

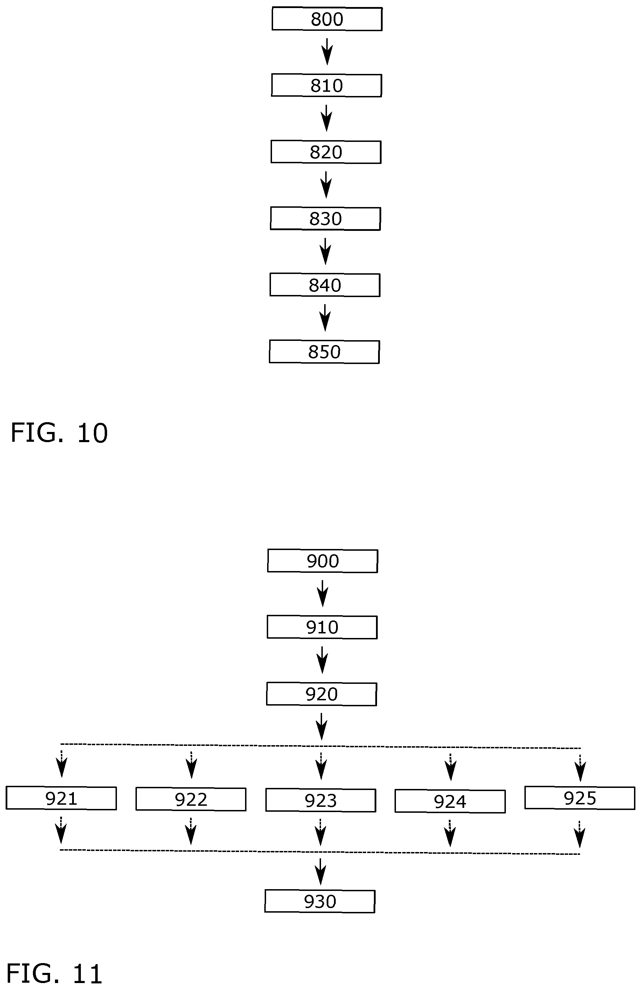

Figur 10 zeigt eine beispielhafte schematische Darstellung eines erfindungsgemäßen Verfahrens zur Ausbildung von Bauwerksteilen 110. Das Verfahren umfasst ein Bereitstellen von vorgefertigten erfindungsgemäßen Schalungselementen 20, 800, ein Bereitstellen von vorgefertigten erfindungsgemäßen Bewehrungsmodulen 30, 810; ein Bereitstellen eines Lehr- oder Schalungsgerüstes 112, 820; ein Anordnen der Schalungselemente 20 und der Bewehrungsmodule 30 auf dem Lehr- oder Schalungsgerüst 112, 830 zu einer gemeinsamen Bauwerksteilstruktur, wobei die Bewehrungsmodule 30 eine homogene Füllzone zur Ergänzung mit Ortbeton 114 definieren; ein Einbringen von weiterer Biege- und Schubbewehrung 120 und/oder von Rohrelementen 130, 840 zur thermischen Bauteilaktivierung in die Bewehrungsmodule 30; und ein Ergänzen der Füllzonen mit Ortbeton 114, 850, so dass die einzelnen Schalungselemente 30 Aussparungskörper im Ortbeton 114 bilden.

Figur 11 zeigt eine beispielhafte schematische Darstellung eines erfindungsgemäßen Verfahrens zur Optimierung eines erfindungsgemäßen Systems 100 zur Ausbildung von Bauwerksteilen 110. Das Verfahren umfasst ein Erzeugen einer ersten parametrischen Grundgeometrie 900 für das gewünschte Bauwerksteil 110 mit einem CAD-Werkzeug; ein Ableiten eines vereinfachten Volumenmodells 910 der parametrischen Grundgeometrie; ein Übermitteln des Volumenmodells 920 in ein FEM-Werkzeug zur Durchführung einer bauphysikalischen und/oder mechanischen Optimierung; ein Rückübermitteln des im FEM-Werkzeug optimierten Volumenmodells 930 an das CAD-Werkzeug; und ein Bestimmen einer optierten Unterteilung des Bauwerksteils 110 in entsprechende Schalungselemente 20 und Bewehrungsmodule 30.

Im FEM-Werkzeug wird dabei mindestens einer der folgenden Schritte ausgeführt: a) Bestimmung der normalen Absorptionskoeffizienten des Schallabsorbers und Optimierung der Schallabsorption 921 zur Annäherung der dreidimensionalen Geometrie an eine einzustellende breitbandige Frequenzdomäne (akustische Eigenschaften - Schallunterdrückung); b) Bestimmung und Optimierung der Diffusität 922 der aus der Diffusorzone gebildeten Struktur zur Schallverteilung (akustische Eigenschaften - Schallstreuung); c) vibroakustische Analyse und Optimierung der Übertragung des Luft- und/oder Körperschalls 923 zur Minimierung der auftretenden Wirkungen (akustische Eigenschaften - Schallleitung); d) generative Evaluierung und Optimierung des Volumen-Oberflächen-Verhältnisses 924 unter Einbeziehung einer variablen Positionierung von Rohrelementen 130 zur thermischen Bauteilaktivierung innerhalb der Bewehrungsmodule 30 zur Annäherung der dreidimensionalen Geometrie an eine einzustellende thermische Verteilung (thermische Eigenschaften - Wärme- bzw. Kälteverteilung); e) Bestimmung und Optimierung der mechanischen Eigenschaften des Volumenmodells 925 (mechanische Eigenschaften - Kraft- bzw. Lastverteilung). Vorzugsweise erfolgt eine erfindungsgemäße Optimierung unter Berücksichtigung aller der voranstehend aufgeführten Aspekte.

Weiterhin kann bei einem erfindungsgemäßen Verfahren das FEM-Werkzeug bei der Ausführung von Schritten die Eigenschaften eines additiven Fertigungsprozesses (z. B. eines dreidimensionalen Betondruckverfahrens) berücksichtigen und dessen Betriebsparameter bei einer hiervon abhängigen Optimierung mit variieren. Nach dem Bestimmen einer optierten Unterteilung des Bauwerksteils 110 können aus dem CAD-Werkzeug automatisch Arbeitsvorgaben zur Erstellung der Schalungselemente 20 mittels eines dreidimensionalen Betondruckverfahrens und/oder zur Bereitstellung der Bewehrungsmodule 20 abgeleitet werden. Die abgeleiteten Arbeitsvorgaben können beispielsweise eine automatische parametrische Programmierung der Druckpfade für ein vorgesehenes Betondruckverfahren, über welche die Geometrie der Schalungselemente 20 durch eine zeitlich gesteuerte Materialdistribution iterativ aufgebaut wird, umfassen.

**Bezugszeichenliste**

| | | | |
|---|---|---|---|
| 10 | Schallabsorber | 100 | System |
| 12 | Grundkörper | 110 | Bauwerksteil |
| 14 | Hohlraum | 112 | Lehr- oder Schalungsgerüst |
| 16 | Einlassöffnung | 114 | Ortbeton |
| 20 | Schalungselement | 116 | Stütze |
| 22 | Boden | 118 | Durchstanzzone |
| 30 | Bewehrungsmodul | 120 | Biege- und Schubbewehrung |
| 32 | Bewehrungsmatte | 130 | Rohrelemente |
| 34 | Auflagezone | | |
| A | Bodenzone | | |
| B | Absorberzone | | |
| C | Aussparungszone | | |
| d | Einlassdurchmesser | | |
| D | Innendurchmesser | | |
| 800 | Bereitstellen von vorgefertigten Schalungselementen (20) | | |
| 810 | Bereitstellen von vorgefertigten Bewehrungsmodulen (30) | | |
| 820 | Bereitstellen eines Lehr- oder Schalungsgerüstes (112) | | |
| 830 | Anordnen der Schalungselemente (20) und der Bewehrungsmodule (30) auf dem Lehr- oder Schalungsgerüst (112) | | |
| 840 | Einbringen von weiterer Biege- und Schubbewehrung (120) und/oder von Rohrelementen (130) | | |
| 850 | Ergänzen der Füllzonen mit Ortbeton (114) | | |
| 900 | Erzeugung einer ersten parametrischen Grundgeometrie | | |
| 910 | Ableiten eines vereinfachten Volumenmodells | | |
| 920 | Übermittlung des Volumenmodells | | |
| 921 | Bestimmung der normalen Absorptionskoeffizienten und Optimierung der Schallabsorption | | |
| 922 | Bestimmung und Optimierung der Diffusität | | |
| 923 | vibroakustische Analyse und Optimierung der Übertragung des Luft- und/oder Körperschalls | | |
| 924 | generative Evaluierung und Optimierung des Volumen-Oberflächen-Verhältnisses | | |
| 925 | Bestimmung und Optimierung der mechanischen Eigenschaften des Volumenmodells | | |
| 930 | Rückübermittlung des im FEM-Werkzeug optimierten Volumenmodells | | |

## Patentansprüche

1. Schallabsorber (10) für Schalungselemente (20), umfassend einen Grundkörper (12) mit einem darin eingeschlossenen Hohlraum (14), wobei der Hohlraum (14) sich von einer Einlassöffnung (16) mit einem Einlassdurchmesser (d) auf einen maximalen Innendurchmesser (D) größer als der Einlassdurchmesser (d) erweitert und einen Helmholtz-Resonator zur Schallunterdrückung ausbildet,
der Schallabsorber **dadurch gekennzeichnet ist, dass** der Grundkörper (12) monolithisch ist, und dass eine Herstellung des Schallabsorbers (10) mittels eines additiven Fertigungsprozesses für mineralische Werkstoffe schichtweise erfolgt und im Fertigungsprozess ein selbsttragendes Strukturgefüge ausgebildet wird.

2. Monolithisches Schalungselement (20) umfassend eine Bodenzone (A) zur Bereitstellung eines tragfähigen Bodens (22) und eine auf der Bodenzone (A) angeordnete Absorberzone (B) mit mindestens einem Schallabsorber (10) nach Anspruch 1 zur Schallunterdrückung, wobei eine Herstellung des Schalungselements (20) mittels eines additiven Fertigungsprozesses für mineralische Werkstoffe schichtweise erfolgt und im Fertigungsprozess ein selbsttragendes Strukturgefüge ausgebildet wird.

3. Schalungselement (20) nach Anspruch 2, wobei das Schalungselement (20) weiterhin eine auf der Absorberzone (B) angeordnete Aussparungszone (C) zur Bereitstellung eines in das Schalungselement (20) monolithisch integrierten Aussparungskörpers umfasst.

4. Schalungselement (20) nach Anspruch 3, wobei eine innere Wandung des Aussparungskörpers eine Strukturierung zur diffusen Streuung von reflektiertem Schall aufweist.

5. System (100) zur Ausbildung von Bauwerksteilen (110), umfassend Schalungselemente (20) nach einem der Ansprüche 2 bis 4; und Bewehrungsmodule (30) aus Biege- und Schubbewehrung als Abstandshalter zwischen zwei benachbart anzuordnenden Schalungselementen (20), wobei die Bewehrungsmodule (30) entsprechend den benötigten Abständen in eine räumliche Form gebracht sind, so dass die Bewehrungsmodule (30) zwischen den Schalungselementen (20) auf einem Lehr- oder Schalungsgerüst (112) anordenbar sind; dazu eingerichtet, auf einem Lehr- oder Schalungsgerüst (112) zur Ausbildung einer gemeinsamen Bauwerksteilstruktur angeordnet zu werden, wobei die Bewehrungsmodule (30) eine homogene Füllzone zwischen den Schalungselementen (20) definieren, welche zur Ergänzung mit Ortbeton (114) vorgesehen ist, so dass die einzelnen Schalungselemente (30) Aussparungskörper im Ortbeton (114) bilden.

6. System (100) nach Anspruch 5, wobei in den Bewehrungsmodulen (30) Auflagezonen (34) zum Einbringen von weiterer Biege- und Schubbewehrung (120) und/oder von Rohrelementen (130) zur thermischen Bauteilaktivierung angeordnet sind.

7. Verfahren zur Ausbildung von Bauwerksteilen (110), umfassend:
- Bereitstellen von vorgefertigten Schalungselementen (20, 800) nach einem der Ansprüche 2 bis 4;
- Bereitstellen von vorgefertigten Bewehrungsmodulen (30, 810) aus Biege- und Schubbewehrung als Abstandshalter zwischen zwei benachbart anzuordnenden Schalungselementen (20), wobei die Bewehrungsmodule (30) entsprechend den benötigten Abständen in eine räumliche Form gebracht sind, so dass die Bewehrungsmodule (30) zwischen den Schalungselementen (20) auf einem Lehr- oder Schalungsgerüst (112) anordenbar sind, wobei in den Bewehrungsmodulen (30) Auflagezonen (34) zum Einbringen von weiterer Biege- und Schubbewehrung (120) und/oder von Rohrelementen (130) zur thermischen Bauteilaktivierung angeordnet sind;
- Bereitstellen eines Lehr- oder Schalungsgerüstes (112, 820);
- Anordnen der Schalungselemente (20) und der Bewehrungsmodule (30) auf dem Lehr- oder Schalungsgerüst (112, 830) zu einer gemeinsamen Bauwerksteilstruktur, wobei die Bewehrungsmodule (30) eine homogene Füllzone zur Ergänzung mit Ortbeton (114) definieren;
- Einbringen von weiterer Biege- und Schubbewehrung (120) und/oder von Rohrelementen (130, 840) zur thermischen Bauteilaktivierung in die Bewehrungsmodule (30);
- Ergänzen der Füllzonen mit Ortbeton (114, 850), so dass die einzelnen Schalungselemente (30) Aussparungskörper im Ortbeton (114) bilden.

8. Verfahren zur Optimierung eines Systems zur Ausbildung von Bauwerksteilen (110) nach Anspruch 5 oder 6, umfassend:
- Erzeugen einer ersten parametrischen Grundgeometrie (900) für ein gewünschtes Bauwerksteil (110) mit einem CAD-Werkzeug;
- Ableiten eines vereinfachten Volumenmodells (910) der parametrischen Grundgeometrie;
- Übermitteln des Volumenmodells (920) in ein FEM-Werkzeug zur Durchführung einer bauphysikalischen und/oder mechanischen Optimierung, wobei im FEM-Werkzeug eine Bestimmung der normalen Absorptionskoeffizienten des Schallabsorbers (10) und eine Optimierung der Schallabsorption (921) zur Annäherung der dreidimensionalen Geometrie an eine einzustellende breitbandige Frequenzdomäne ausgeführt wird;
- Rückübermitteln des im FEM-Werkzeug optimierten Volumenmodells (930) an das CAD-Werkzeug;
- Bestimmen einer optimierten Unterteilung des Bauwerksteils (110) in entsprechende Schalungselemente (20) und Bewehrungsmodule (30).

9. Verfahren nach Anspruch 8, wobei im FEM-Werkzeug mindestens einen der folgenden weiteren Schritte ausgeführt wird:
a) Bestimmung und Optimierung der Diffusität (922) der aus der Diffusorzone gebildeten Struktur zur Schallverteilung;
b) vibroakustische Analyse und Optimierung der Übertragung des Luft- und/oder Körperschalls (923) zur Minimierung der auftretenden Wirkungen;
c) generative Evaluierung und Optimierung des Volumen-Oberflächen-Verhältnisses (924) unter Einbeziehung einer variablen Positionierung von Rohrelementen (130) zur thermischen Bauteilaktivierung innerhalb der Bewehrungsmodule (30) zur Annäherung der dreidimensionalen Geometrie an eine einzustellende thermische Verteilung;
d) Bestimmung und Optimierung der mechanischen Eigenschaften des Volumenmodells (925).

10. Verfahren nach Anspruch 8 oder 9, wobei das FEM-Werkzeug bei der Ausführung von Schritten die Eigenschaften eines additiven Fertigungsprozesses berücksichtigt und dessen Betriebsparameter bei einer hiervon abhängigen Optimierung variiert.

11. Verfahren nach einem der Ansprüche 8 bis 10, wobei aus dem CAD-Werkzeug automatisch Arbeitsvorgaben zur Erstellung der Schalungselemente (20) mittels eines additiven Fertigungsprozesses und/oder zur Bereitstellung der Bewehrungsmodule (20) abgeleitet werden.

## Claims

1. A sound absorber (10) for formwork elements (20), comprising: a basic body (12) with a cavity (14) enclosed therein, wherein the cavity (14) expands from an inlet opening (16) having an inlet diameter (d) to a maximum inner diameter (D) greater than the inlet diameter (d), forming a Helmholtz resonator for sound suppression;
the sound absorber is **characterized in that** the basic body (12) is monolithic, and
the sound absorber (10) is produced layer by layer via an additive manufacturing process for mineral materials, forming a self-supporting structure in the manufacturing process.

2. A monolithic formwork element (20), comprising: a base zone (A) for providing a load-bearing floor (22), and an absorber zone (B) arranged on the base zone (A) and comprising at least one sound absorber (10) according to claim 1 for sound suppression, wherein the formwork element (20) is produced layer by layer via an additive manufacturing process for mineral materials, forming a self-supporting structure in the manufacturing process.

3. The formwork element (20) according to claim 2, further comprising a recess zone (C) arranged on the absorber zone (B) for providing a recess body that is monolithically integrated into the formwork element (20).

4. The formwork element (20) according to claim 3, wherein an inner wall of the recess body has a structuring for diffusely scattering reflected sound.

5. A system (100) for forming structural components (110), comprising: the formwork elements (20) according to any one of claims 2-4; and reinforcement modules (30) made of flexural and shear reinforcement as spacers between two adjacently arranged formwork elements (20), wherein the reinforcement modules (30) are formed into a spatial shape in accordance with a required spacing, so that the reinforcement modules (30) can be arranged between the formwork elements (20) on a falsework or formwork scaffold (112); and the system is adapted to be arranged on the falsework or formwork scaffold (112) to form a common structural component structure, wherein the reinforcement modules (30) define a homogeneous filling zone between the formwork elements (20) for subsequent filling with cast-in-situ concrete (114), so that the formwork elements (30) form recess bodies within the cast-in-situ concrete (114).

6. The system (100) according to claim 5, wherein the reinforcement modules (30) are provided with support zones (34) for introducing additional flexural and shear reinforcement (120) and/or tubular elements (130) for thermal component activation.

7. A method for forming structural components (110), comprising:
- providing prefabricated formwork elements (20, 800) according to any one of claims 2-4;
- providing prefabricated reinforcement modules (30, 810) made of flexural and shear reinforcement as spacers between two adjacently arranged formwork elements (20), wherein the reinforcement modules (30) are formed into a spatial shape in accordance with a required spacing, so that the reinforcement modules (30) can be arranged between the formwork elements (20) on a falsework or formwork scaffold (112), wherein the reinforcement modules (30) are provided with support zones (34) for introducing additional flexural and shear reinforcement (120) and/or tubular elements (130) for thermal component activation;
- providing the falsework or formwork scaffold (112, 820);
- arranging the formwork elements (20) and the reinforcement modules (30) on the falsework or formwork scaffold (112, 830) to form a common structural component, wherein the reinforcement modules (30) define a homogeneous filling zone for subsequent filling with cast-in-situ concrete (114);
- introducing the additional flexural and shear reinforcement (120) and/or the tubular elements (130, 840) for thermal component activation into the reinforcement modules (30); and
- filling the filling zones with cast-in-situ concrete (114, 850) so that the formwork elements (30) form recess bodies in the cast-in-situ concrete (114).

8. A method for optimizing the system for forming the structural components (110) according to claim 5 or 6, comprising:
- generating a first parametric basic geometry (900) for a desired structural component (110) using a CAD tool;
- deriving a simplified volume model (910) of the parametric basic geometry;
- transmitting the volume model (920) to an FEM tool to perform a structural and/or mechanical optimization, wherein the FEM tool determines normal absorption coefficients of a sound absorber (10) and optimizes sound absorption (921) to approximate the three-dimensional geometry to a to-be-set broadband frequency domain;
- transmitting the volume model (930) optimized in the FEM tool back to the CAD tool; and
- determining an optimized subdivision of the structural component (110) into corresponding formwork elements (20) and reinforcement modules (30).

9. The method according to claim 8, wherein the FEM tool performs further performs at least one of the following steps:
a) determining and optimizing diffusivity (922) of a structure formed from a diffuser zone for sound distribution;
b) performing vibroacoustic analysis and optimization of airborne and/or structure-borne sound transmission (923) to minimize effects;
c) performing generative evaluation and optimization of a volume-to-surface ratio (924), comprising variable positioning of tubular elements (130) for thermal component activation within the reinforcement modules (30) to approximate the three-dimensional geometry to the to-be-set thermal distribution; and
d) determining and optimizing mechanical properties of the volume model (925).

10. The method according to claim 8 or 9, wherein the FEM tool takes into account properties of an additive manufacturing process when performing the steps and varies its operating parameters during an optimization dependent thereon.

11. The method according to any one of claims 8-10, wherein the CAD tool automatically derives work instructions for producing the formwork elements (20) via the additive manufacturing process and/or for providing the reinforcement modules (20).

## Revendications

1. Absorbeur acoustique (10) pour éléments de coffrage (20), comprenant un corps de base (12) doté d'une cavité (14) fermée à l'intérieur, la cavité (14) s'élargissant à partir d'une ouverture d'entrée (16) de diamètre d'entrée (d) jusqu'à un diamètre intérieur maximal (D) supérieur audit diamètre d'entrée (d), et formant ainsi un résonateur de Helmholtz destiné à l'atténuation du bruit,
**caractérisé en ce que** le corps de base (12) est monolithique, et **en ce que**
l'absorbeur acoustique (10) est fabriqué couche par couche au moyen d'un procédé de fabrication additive pour matériaux minéraux et qu'une structure autoportante est formée au cours du processus de fabrication.

2. Élément de coffrage monolithique (20) comprenant une zone de base (A) destinée à former un sol porteur (22), et une zone d'absorption (B), disposée sur la zone de base (A), comportant au moins un absorbeur acoustique (10) selon la revendication 1 pour l'atténuation du bruit, **caractérisé en ce que** l'élément de coffrage (20) est fabriqué par couches successives à l'aide d'un procédé de fabrication additive pour matériaux minéraux, générant une structure autoporteuse au cours du procédé.

3. Élément de coffrage (20) selon la revendication 2, **caractérisé en ce que** l'élément de coffrage (20) comprend en outre une zone de réservation (C), disposée sur la zone d'absorption (B), destinée à former un corps de réservation intégré de manière monolithique à l'intérieur de l'élément de coffrage (20).

4. Élément de coffrage (20) selon la revendication 3, **caractérisé en ce que** la paroi interne du corps de réservation présente une structuration destinée à diffuser de manière diffuse le son réfléchi.

5. Système (100) pour la formation d'éléments de construction (110), comprenant des éléments de coffrage (20) selon l'une des revendications 2 à 4 ; et des modules d'armature (30) constitués d'armatures de flexion et de cisaillement, utilisés comme entretoises entre deux éléments de coffrage adjacents (20), lesdits modules d'armature (30) étant formés spatialement en fonction des espacements requis, de manière à ce que les modules d'armature (30) puissent être disposés entre les éléments de coffrage (20) sur un échafaudage ou une cadre de coffrage (112), le tout étant conçu pour être disposé sur un échafaudage ou un cadre de coffrage (112) afin de former une structure d'ouvrage commune, les modules d'armature (30) définissant une zone de remplissage homogène entre les éléments de coffrage (20), destinée à être complétée avec du béton coulé sur place (114), de manière que les éléments de coffrage (30) forment des corps de réservation dans le béton coulé sur place (114).

6. Système (100) selon la revendication 5, **caractérisé en ce que** les modules d'armature (30) comportent des zones d'appui (34) pour l'insertion d'armatures de flexion et de cisaillement supplémentaires (120) et/ou d'éléments tubulaires (130) pour l'activation thermique des éléments de construction.

7. Procédé de formation des éléments de construction (110), comprenant les étapes suivantes :
- fourniture d'éléments de coffrage préfabriqués (20, 800) selon l'une des revendications 2 à 4 ;
- fourniture de modules d'armature préfabriqués (30, 810) constitués d'armatures de flexion et de cisaillement servant d'entretoises entre deux éléments de coffrage (20) à disposer de manière adjacente, les modules d'armature (30) étant formés spatialement selon les distances requises, de manière à ce que lesdits modules d'armature (30) puissent être disposés entre les éléments de coffrage (20) sur un échafaudage ou un cadre de coffrage (112), les modules d'armature (30) comprenant en outre des zones d'appui (34) destinées à l'insertion d'armatures de flexion et de cisaillement supplémentaires (120) et/ou d'éléments tubulaires (130) pour l'activation thermique des éléments de construction ;
- fourniture d'un échafaudage ou cadre de coffrage (112, 820) ;
- disposition des éléments de coffrage (20) et des modules d'armature (30) sur l'échafaudage ou cadre de coffrage (112, 830) pour former une structure unifiée de pièce d'ouvrage, les modules d'armature (30) définissant une zone de remplissage homogène destinée à être complétée avec du béton coulé sur place (114) ;
- insertion d'armatures de flexion et de cisaillement supplémentaires (120) et/ou d'éléments tubulaires (130, 840) dans les modules d'armature (30) pour l'activation thermique des éléments de construction ;
- remplissage des zones de remplissage avec le béton coulé sur place (114, 850), de manière que les éléments de coffrage (30) forment des corps de réservation dans le béton coulé sur place (114).

8. Procédé d'optimisation d'un système pour la formation d'éléments de construction (110) selon la revendication 5 ou 6, comprenant :
- création d'une première géométrie de base paramétrique (900) pour un élément de construction (110) à l'aide d'un outil de CAO ;
- dérivation d'un modèle volumique simplifié (910) à partir de la géométrie de base paramétrique ;
- transmission du modèle volumique (920) à un outil FEM en vue de réaliser une optimisation physico-structurelle et/ou mécanique, ledit outil FEM permettant de déterminer les coefficients d'absorption acoustique normaux de l'absorbeur acoustique (10) et d'effectuer une optimisation de l'absorption acoustique (921) afin d'adapter la géométrie tridimensionnelle à une plage de fréquences à large bande prédéfinie ;
- renvoi du modèle volumique optimisé (930) depuis l'outil FEM vers l'outil de CAO ;
- détermination d'un découpage optimisé de l'élément de construction (110) en éléments de coffrage (20) et modules d'armature (30) correspondants.

9. Procédé selon la revendication 8, **caractérisé en ce que** l'outil FEM exécute au moins une des étapes supplémentaires suivantes :
a) détermination et optimisation de la diffusivité (922) de la structure formée dans la zone diffuseur, pour une répartition optimisée du son ;
b) analyse vibroacoustique et optimisation de la transmission du son aérien et/ou solidien (923), en vue de réduire les effets associés ;
c) évaluation générative et optimisation du rapport volume/surface (924), en prenant en compte une position variable des éléments tubulaires (130) dans les modules d'armature (30) pour l'activation thermique, de manière à adapter la géométrie tridimensionnelle à une répartition thermique cible ;
d) détermination et optimisation des propriétés mécaniques du modèle volumétrique (925).

10. Procédé selon la revendication 8 ou 9, **caractérisé en ce que** l'outil FEM, lors de l'exécution des étapes, prend en compte les caractéristiques d'un procédé de fabrication additive, et **en ce que** les paramètres de fonctionnement dudit procédé sont modifiés dans le cadre d'une optimisation dépendante.

11. Procédé selon l'une des revendications 8 à 10, **caractérisé en ce que** l'outil de CAO génère automatiquement des instructions de fabrication pour la réalisation des éléments de coffrage (20) par procédé de fabrication additive et/ou pour la fourniture des modules d'armature (20).
